(19) Europäisches Patentamt / European Patent Office / Office européen des brevets

(11) **EP 1 752 765 A2**

(12) **EUROPEAN PATENT APPLICATION**

(43) Date of publication:
**14.02.2007 Bulletin 2007/07**

(51) Int Cl.:
*G01N 29/24* (2006.01)     *G01N 29/11* (2006.01)

(21) Application number: **06016437.3**

(22) Date of filing: **07.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **12.08.2005 JP 2005234770**

(71) Applicant: **OMRON CORPORATION**
**Kyoto-shi, Kyoto 600-8530 (JP)**

(72) Inventors:
• **Omata, Nobuaki, c/o Omron Corporation**
**Shiokoji-dori**
**Shimogyo-ku, Kyoto-shi (JP)**
• **Suga, Takahiro, c/o Omron Corporation**
**Shiokoji-dori**
**Shimogyo-ku, Kyoto-shi (JP)**
• **Urabe, Shinichi, c/o Omron Corporation**
**Shiokoji-dori**
**Shimogyo-ku, Kyoto-shi (JP)**

(74) Representative: **Kilian, Helmut**
**Wilhelms, Kilian & Partner**
**Patentanwälte**
**Eduard-Schmid-Strasse 2**
**81541 München (DE)**

(54) **Frictional characteristic measuring apparatus and tire directed thereto**

(57) In a frictional characteristic measuring apparatus, a sensor section emits a sound wave, which gives vibration to an object to be measured, as an incident sound wave, and receives a reflected sound wave generated by reflection of the sound wave on the object to be measured. An operational processing section derives a loss tangent of a viscoelastic characteristic of the object to be measured based upon the reflected sound wave received by the sensor section. Further, the operational processing section calculates a frictional characteristic from the derived loss tangent by means of a prescribed conversion constant. Moreover, the operational processing section previously emits an incident sound wave in a state where the object to be measured is not present, and stores the reflected sound wave as a reference value.

Fig. 1

**Description**

BACKGROUND OF THE INVENTION

1. Field of the Invention

The present invention relates to a frictional characteristic measuring apparatus for measuring a frictional characteristic of an object, and particularly relates to a frictional characteristic measuring apparatus capable of estimating a change in frictional characteristic of a viscoelastic body under actual use conditions, and a tire directed thereto.

2. Description of the Related Art

Performance of a rubber product used for a tire, a roller and the like is determined according to a frictional characteristic thereof. For example, as for a tire, a so-called grip characteristic is acquired by frictional force generated between the tire and a road surface. Therefore, measurement of a frictional characteristic is important for evaluating a characteristic of the rubber product or the like in a product pre-shipment test, a test of deterioration in a product associated with the use thereof, and the like.

As a method for measuring the frictional characteristic, a method has been conventionally known which is measuring frictional force generated when mechanical displacement is given to an object to be measured in the state of being welded with pressure under a prescribed load and calculating a frictional coefficient from the load and the measured frictional force.

For example, Japanese Patent Publication No. 3215579 discloses a frictional characteristic measuring apparatus of a paper feeding roller for a copying machine, an electrophotographic machine and the like, the apparatus measuring a frictional coefficient between the paper feeding roller and paper to be fed.

However, in the conventional method, it has been necessary to prepare a test specimen so as to be placed on the measurement apparatus in order to measure the frictional characteristic.

This has necessitated cutting of the test specimen from the object to be measured, making it impossible to measure the frictional characteristic of the object to be measured while the object remains non-destructive. Further, in the conventional measurement apparatus, it has not been possible to perform the deterioration test of a product in use because the target to be measured is destroyed. Moreover, in the conventional measurement apparatus, it has not been possible to perform a 100% inspection in the pre-shipment test, and hence a scanning inspection has inevitably been performed.

SUMMARY OF THE INVENTION

Accordingly, the present invention was made in order to solve the above-mentioned problems, and has an object to provide a frictional characteristic measuring apparatus capable of measuring frictional characteristic of an object to be measured in a non-destructive manner, and a tire directed thereto.

According to the present invention, a frictional characteristic measuring apparatus includes: a sensor section, which is arranged in intimate contact with an object to be measured and generates a variation according to a viscoelastic characteristic of the object to be measured; and an operational processing section, which acquires a loss tangent among viscoelastic characteristics of the object to be measured based upon the variation of the sensor section, and calculates a frictional characteristic of the object to be measured from the acquired loss tangent.

It is preferable that the sensor section includes: an emission device for emitting an incident sound wave to the object to be measured; a reception device for receiving a reflected sound wave generated by reflection of the incident sound wave emitted by the emission device on the object to be measured; and a delay member, through which the incident sound wave and the reflected sound wave are propagated to generate delay time from emission of the incident sound wave by the emission device to reception of the reflected sound wave by the reception device, and that the operational processing section calculates a loss tangent of the object to be measured based upon the reflected sound wave received by the reception device in the sensor section.

It is preferable that the sensor section includes: an emission device for emitting an incident sound wave to the object to be measured; a reception device for receiving a reflected sound wave generated by reflection of the incident sound wave emitted by the emission device on the object to be measured; and a delay member, through which the incident sound wave and the reflected sound wave are propagated to generate delay time from emission of the incident sound wave by the emission device to reception of the reflected sound wave by the reception device, and that the operational processing section calculates a loss tangent of the object to be measured based upon a first reflected sound wave generated on an interface between the delay member and the object to be measured and a second reflected sound wave generated on a face of the object to be measured which is opposed to the interface where the first reflected sound wave is generated.

It is preferable that the sensor section further includes a reflection member, arranged in intimate contact with the object to be measured, on the face of the object to be measured which is opposed to the interface where the first reflected sound wave is generated.

It is preferable that the operational processing section calculates a loss tangent of the object to be measured by comparing the reflected sound wave with a previously acquired reference value.

It is preferable that the sensor section further includes a transducer which receives an electrical signal to generate the incident sound wave and receives the reflected sound wave to generate an electrical signal, and the transducer realizes the emission device and the reception device.

It is preferable that the sensor section includes: an emission device for emitting an incident sound wave to the object to be measured; and a reception device for receiving a transmitted sound wave generated by transmission of the incident sound wave emitted by the emission device through the object to be measured, and that the operational processing section calculates a loss tangent of the object to be measured based upon the incident sound wave emitted by the emission device in the sensor section and the transmitted sound wave received by the reception device in the sensor section.

It is preferable that the sensor section further includes a first transmitting section for transmitting waveform data of a sound wave received by the reception device and/or a sound wave emitted by the emission device through a radio signal, and that the operational processing section further includes a second transmitting section for receiving the waveform data transmitted from the sensor section.

It is preferable that the sensor section includes a distorted member, which is arranged so as to be in intimate contact with the object to be measured and is expanded or contracted in an inward direction of the interface between the distorted member and the object to be measured according to an internal electric field generated by an applied voltage, and that the operational processing section calculates a loss tangent of the object to be measured based upon an impedance derived from a current flowing in a closed circuit including the distorted member.

It is preferable that the sensor section further includes a first transmitting section for transmitting the impedance to the operational processing section through a radio signal, and that the operational processing section further includes a second transmitting section for receiving the impedance transmitted from the sensor section.

It is preferable that the sensor section is arranged so as to move integrally with the object to be measured.

It is preferable that the object to be measured moves so as to generate frictional force on the face thereof in contact with another member, the sensor section further includes a first transmitting section for transmitting to the operational processing section waveform data of a sound wave received by the reception device and/or a sound wave emitted by the emission device through a radio signal, the emission device irradiates the contact face of the object to be measured with the incident sound wave, the reception device receives the reflected sound wave generated by reflection on the contact face of the object to be measured, and the operational processing section further includes a second transmitting section for receiving the waveform data transmitted from the sensor section.

It is preferable that the object to be measured moves so as to generate frictional force on the face thereof in contact with another member, the sensor section further includes a first transmitting section for transmitting to the operational processing section waveform data of a sound wave received by the reception device and/or a sound wave emitted by the emission device through a radio signal, the emission device applies an incident sound wave along the contact face of the object to be measured, the reception device receives a transmitted sound wave having been transmitted through the vicinity of the contact face of the object to be measured, and the operational processing section further includes a second transmitting section for receiving the waveform data transmitted from the sensor section.

It is preferable that the object to be measured moves so as to generate frictional force on the face thereof in contact with another member, the sensor section further includes a first transmitting section for transmitting the impedance to the operational processing section through a radio signal, and is arranged in intimate contact with the object to be measured such that the interface is located along the contact face of the object to be measured, and the operational processing section further includes a second transmitting section for receiving the impedance transmitted from the sensor section.

It is preferable that the object to be measured moves so as to generate frictional force on the face thereof in contact with another member, the sensor section is arranged so as to move integrally with the object to be measured, the reception device further receives a slipping sound wave generated by friction of the object to be measured against another member, and the operational processing section detects a slipping state of the object to be measured based upon the slipping sound wave received by the sensor section.

It is preferable that the sensor section further includes: a power generation section for generating electric power from movement energy generated by movement of the object to be measured; and a power storage section for storing the electric power supplied from the power generation section.

It is preferable that the sensor section includes: a substrate section, which is arranged such that first and second faces thereof are in intimate contact with the object to be measured, and propagates a surface acoustic wave along the first and second faces, a first electrode, which is arranged on the substrate section and receives an incident electric wave from the outside to generate the surface acoustic wave, a second electrode, which is arranged so as to be opposed to the first electrode through the first face on the substrate section and generates a first reflected electric wave from a first surface acoustic wave that arrives after transmitting from the first electrode through the object to be measured in intimate contact with the first face; and a third electrode, which is arranged so as to be opposed to the first electrode through the second face on the substrate section, and generates a second reflected electric wave from a second surface acoustic wave that arrives after transmitting from the first electrode through the object to be measured in intimate contact with the second face, and that the operational processing section includes: a transmission circuit for emitting the incident electric wave to the sensor section; a reception circuit for receiving the first and second reflected electric waves from the sensor section; and an operating section for calculating a loss tangent of the object to be measured based upon the incident electric wave and the first and second reflected electric waves.

It is preferable that the object to be measured is a tire, and the sensor section is arranged inside the tire. It is preferable that the operational processing section further includes a deterioration state determining device for determining a deterioration state of the object to be measured based upon changes in frictional characteristic of the same object to be measured.

It is preferable that the deterioration state determining device determines the deterioration state of the object to be measured based upon changes in peak frequency and/or peak value of the frictional characteristic.

It is preferable that the operational processing section further includes a quality determining device for determining the quality of the object to be measured by comparing the frictional characteristic of the object to be measured with a predefined frictional characteristic.

It is preferable that the deterioration state determining device determines the quality of the object to be measured by comparing the peak frequency and/or peak value of the frictional characteristic with a predefined peak frequency and/or peak value.

It is preferable that the operational processing section further includes a display output section for displaying and/or outputting to the outside determined results of the deterioration state determining device and/or the quality determining device.

It is preferable that the operational processing section further includes a calibration device for receiving a loss tangent of a calibration reference with a known frictional characteristic and determining a conversion coefficient for converting the loss tangent into the frictional coefficient so as to make a frictional characteristic, calculated from the acquired loss tangent, substantially coincide with the frictional characteristic of the calibration reference.

Further, the present invention provides a tire directed to a frictional characteristic measuring apparatus which includes the sensor section of the aforesaid frictional characteristic measuring apparatus.

According to the present invention, the sensor section can be brought into intimate contact with the object to be measured to measure a viscoelastic characteristic of the object to be measured, so as to calculate a frictional characteristic based upon the measured viscoelastic characteristic. Hence there is no need for production of a test specimen as has been conventionally necessary. It is therefore possible to realize the frictional characteristic measuring apparatus capable of measuring the frictional characteristic of the object to be measured at high speed in a non-destructive manner.

BRIEF DESCRIPTION OF THE DRAWINGS

FIG. 1 shows a schematic constitutional view of a frictional characteristic measuring apparatus according to Embodiment 1 of the present invention;
FIG. 2 shows a view of one example of measurement with the use of the frictional characteristic measuring apparatus;
FIG. 3 shows a view comparing frictional coefficients calculated from loss tangents with frictional coefficients measured with the use of a conventional frictional characteristic measuring apparatus;
FIG. 4 shows a view for explaining a method for deriving a loss tangent according to a surface reflection method;
FIG. 5 shows a flowchart for measuring the frictional characteristic;
FIG. 6 shows a view for explaining deterioration modes of the frictional characteristic of the object to be measured;
FIG. 7 shows a flowchart for determining a deterioration state of the object to be measured;
FIG. 8 shows a view of a modified example of Example 1;
FIG. 9 shows a flowchart for calibrating a conversion coefficient;
FIG. 10 shows a schematic constitutional view of a frictional characteristic measuring apparatus according to Embodiment 2;
FIG. 11 shows a view of an arrangement example of a sensor section;
FIG. 12 shows a sectional view of a tire where a transducer is arranged;

FIG. 13 shows a view of a vehicle equipped with the frictional characteristic measuring apparatus;

FIG. 14 shows a view for explaining detection of a slipping state;

FIG. 15 shows a flowchart for detecting the slipping state;

FiG. 16 shows a schematic constitutional view of a frictional characteristic measuring apparatus according to Embodiment 3;

FIG. 17 shows a view for explaining a method for deriving a loss tangent according to a bottom reflection method;

FIG. 18 shows time waveforms in respective cases of FIG. 17;

FIG. 19 shows a flowchart for measuring the frictional characteristic according to the bottom reflection method;

FIG. 20 shows a schematic constitutional view of a frictional characteristic measuring apparatus according to a modified example of Embodiment 3;

FIG. 21 shows a schematic constitutional view of a frictional characteristic measuring apparatus according to Embodiment 4;

FIG. 22 shows a view for explaining a method for deriving a loss tangent according to a transmission method;

FIG. 23 shows a flowchart for measuring a frictional characteristic according to the transmission method;

FIG. 24 shows a schematic constitutional view of a frictional characteristic measuring apparatus according to a modified example of Embodiment 4;

FIG. 25 shows a view of an arrangement example of a sensor section;

FIG. 26 shows a schematic constitutional view of a frictional characteristic measuring apparatus according to Embodiment 5;

FIG. 27 shows a specific view of a distorted member;

FIG. 28 shows a flowchart for measuring the frictional characteristic according to an impedance method;

FIG. 29 shows a schematic constitutional view of a sensor section according to a modified example of Embodiment 5;

FIG. 30 shows a schematic constitutional view of a frictional characteristic measuring apparatus according to Embodiment 6;

FIG. 31 shows a view for explaining a method for deriving a loss tangent according to an SAW;

FIG. 32 shows time waveforms in respective cases of FIG. 31; and

FIG. 33 shows a flowchart for measuring the frictional characteristic according to the SAW.

## DETAILED DESCRIPTION OF THE PREFERRED EMBODIMENTS

Embodiments of the present invention are described in detail with reference to drawings. It is to be noted that the same or corresponding parts in the drawings are provided with the same symbols, and descriptions thereof are not repeated.

[Embodiment 1]

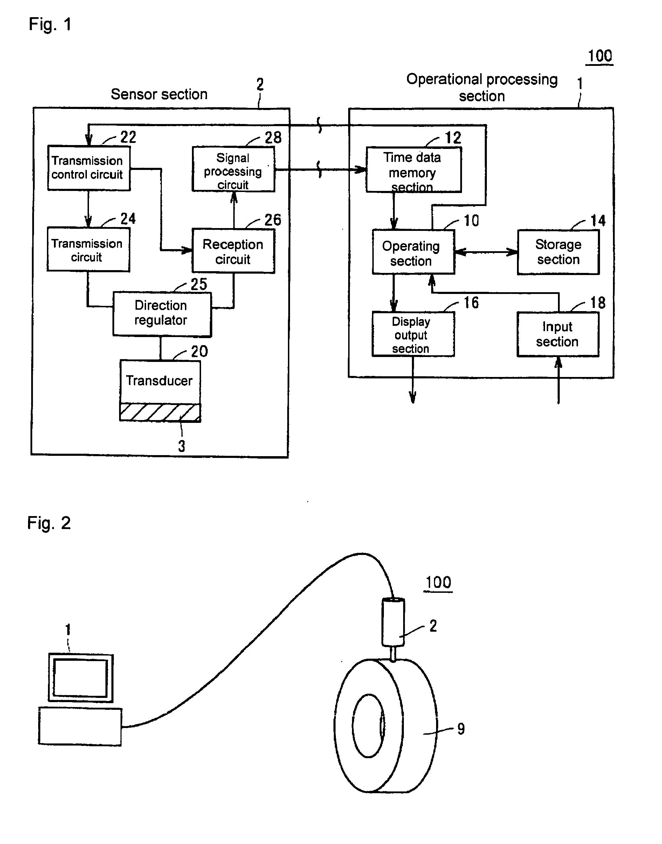

FIG. 1 shows a schematic constitutional view of a frictional characteristic measuring apparatus 100 according to Embodiment 1 of the present invention.

With reference to FIG. 1, the frictional characteristic measuring apparatus 100 is comprised of an operational processing section 1 and a sensor section 2. Further, in the frictional characteristic measuring apparatus 100, a sound wave that vibrates the object to be measured is emitted as an incident sound wave from the sensor section 2, and a reflected sound wave generated by reflection of the sound wave on the object to be measured is received by the sensor section 2. Moreover, in the frictional characteristic measuring apparatus 100, the operational processing section 1 calculates a frictional characteristic of the object to be measured based upon the reflected sound wave received by the sensor section 2. It should be noted that the incident sound wave emitted by the sensor section 2 is preferably an ultrasound wave.

The operational processing section 1 is comprised of an input section 18, a time data memory section 12, a storage section 14, an operating section 10, and a display output section 16.

The input section 18 receives a command from the outside such as a user, and outputs the command to the operating section 10. By way of example, the input section 18 is comprised of an operating button, a key board, a mouse, a touch panel, and the like.

The time data memory section 12 stores a time waveform of a sound wave, received by the sensor section 2, at a prescribed cycle. It should be noted that the time data memory section 12 changes a cycle at which the time waveform is stored in response to a request from the operating section 10.

The storage section 14 stores a reference value acquired through the operating section 10, and reads the stored reference value in response to a request from the operating section 10. Further, the storage section 14 stores data to be used for later-described deterioration determining function and quality determination function.

Upon receipt of a measurement command from the outside through the input section 18, the operating section 10 gives an emission command to the sensor section 2, to allow an incident sound wave to be emitted to the object to be measured. The operating section 10 then reads time wave form data of the reflected sound wave stored in the time data memory section 12, and performs a frequency analysis processing, e.g. Fourier Processing [FFT (Fast Fourier Transform) processing; hereinafter referred to as FFT processing], to acquire an amplitude value and a phase at each frequency. Subsequently, the operating section 10 reads the reference values stored in the storage section 14 and compares the reference values with the acquired amplitude value and the phase of the reflected sound wave at each frequency, to calculate a frictional characteristic of the object to be measured. Further, the operating section 10 outputs the calculated frictional characteristic of the object to be measured to the display output section 16.

Further, upon receipt of a reference value acquirement command from the outside through the input section 18, the operating section 10 gives an emission command to the sensor section 2, to allow an incident sound wave to be emitted to the object to be measured. The operating section 10 then reads time wave form data of the reflected sound wave stored in the time data memory section 12, and performs FFT processing, to acquire an amplitude value and a phase at each frequency. Subsequently, the operating section 10 stores the acquired amplitude value and the phase at each frequency as reference values in the storage section 14.

Further, the operating section 10 compares the calculated frictional characteristic of the object to be measured with the prescribed frictional characteristic stored in the storage section 14 to determine the quality of the frictional characteristic of the object to be measured, and then outputs the determination result to the display output section 16. Further, the operating section 10 determines the deterioration state of the frictional characteristic of the object to be measured based upon the change in frictional characteristic with respect to the same object to be measured, and then outputs the determination result to the display output section 16.

The display output section 16 displays the calculated frictional characteristic of the object to be measured and the determination result based upon the frictional characteristic from the operating section 10, and/or outputs such data to the outside. When making a display, the display output section 16 is, for example, made of a display unit such as a liquid crystal display unit or a plasma display unit. Further, when outputting data to the outside, the display output section 16 is, for example, made of an interface or the like which corresponds to a standard such as USB (Universal Serial Bus), RS-232C (Recommended Standard 232 Version C), IEEE (Institute of Electrical and Electronic Engineers) 1394, SCSI (Small Computer System Interface), Ethernet (Registered Trademark), or IEEE 1284 (Parallel Port).

Meanwhile, the sensor section 2 is comprised of a transmission control circuit 22, a transmission circuit 24, a direction regulator 25, a transducer 20, a reception circuit 26, a signal processing circuit 28, and a delay member 3.

Upon receipt of an emission command from the operational processing section 1, the transmission control circuit 22 outputs to the transmission circuit 24 a generation signal for generating an incident sound wave to be emitted. The transmission control circuit 22, for example, outputs a pulse signal for generating a pulsed incident sound wave, or a cycle signal for generating an incident sound wave so as to contain a prescribed frequency component. Further, the transmission control circuit 22 outputs to the reception circuit 26 a trigger signal for notifying the timing for outputting the generation signal.

The transmission circuit 24 outputs an electrical signal according to the generation signal received from the transmission control circuit 22 to the direction regulator 25.

The direction regulator 25 is connected with the transmission circuit 24, the transducer 20 and the reception circuit 26. The direction regulator 25 transmits an electrical signal outputted from the transmission circuit 24 to the transducer 20, and outputs an electric signal received from the transducer 20 to the reception circuit 26. Namely, the direction regulator 25 controls the transmitting direction of the electrical signal outputted from the transmission circuit 24 so as to prevent the signal from being outputted to the reception circuit 26.

The transducer 20 is connected with the transmission circuit 24 and the reception circuit 26 through the direction regulator 25. The transducer 20 converts the electrical signal received from the transmission circuit 24 through the direction regulator 25 into a sound wave, and emits the sound wave to the object to be measured. The transducer 20 also converts a sound wave received from the object to be measured into an electrical signal and outputs the signal to the reception circuit 26 through the direction regulator 25. By way of example, the transducer 20 is made of a piezoelectric element such as lead zirconate titanate.

The reception circuit 26 receives the electrical signal received from the direction regulator 25, amplifies the signal in a prescribed manner, and then outputs the signal to the signal processing circuit 28. Further, upon receipt of the trigger signal from the transmission control circuit 22, the reception circuit 26 starts reception of the electrical signal outputted from the transducer 20.

The signal processing circuit 28 receives the electrical signal from the reception circuit 26, performs analog/digital processing or the like, and then sequentially outputs momentary amplitude values of a sound wave received by the transducer 20.

The delay member 3 is arranged so as to be in intimate contact with the transducer 20, and propagates an incident sound wave generated from the transducer 20 and a reflected sound wave generated on the object to be measured. Thereby, the timing at which the reflected sound wave reflected on the object to be measured is incident on the transducer 20 is delayed with respect to the timing at which the transducer 20 emits the incident sound wave. It is thus possible to avoid measurement error due to overlapping of a cycle in which the transmission circuit 24 generates the incident sound wave, namely a cycle in which the reception circuit 26 halts sound-wave reception, and a cycle in which the reception circuit 26 receives the electrical signal of the reflected sound wave.

FIG. 2 shows one example of measurement with the use of the frictional characteristic measuring apparatus 100. With reference to FIG. 2, a case is described by way of example where a tire is the object 9 to be measured.

First, the user arranges the sensor section 2 of the frictional characteristic measuring apparatus 100 so as to be in intimate contact with the surface of the object 9 to be measured. Upon receipt of a measurement command from the user, the frictional characteristic measuring apparatus 100 emits an incident sound wave from the sensor section 2, and the receives the reflected sound wave, generated on the object 9 to be measured, in the sensor section 2. Further, the frictional characteristic measuring apparatus 100 calculates a frictional characteristic of the object 9 to be measured according to the received a reflected sound wave, and displays the frictional characteristic to the user.

(Loss tangent and frictional characteristic)

It has become apparent that a frictional characteristic of a material has a strong correlation with a storage elastic modulus which shows a viscoelastic characteristic of the material and a loss tangent derived from a loss elastic modulus.

The viscoelastic characteristic of the material is a characteristic combining elasticity that causes distortion in proportion to given stress with viscosity that causes viscous flowing upon receipt of the given stress. Such a viscoelastic characteristic can be described by means of a Maxwell model where a spring as an elastic component is connected in parallel with a dashpot as a viscous component, or by means of a Vogit model where the spring is connected in series with the dashpot. Further, the aforesaid storage elastic modulus is a value for expressing elasticity of the material, and the aforesaid loss elastic modulus is a value for expressing viscosity of the material.

Generally, when cyclic stress is given to the material, a component having the same phase as that of the stress corresponds to an elastic storage, and a component having a phase difference of 90° with respect to the stress corresponds to a loss storage ratio. Namely, the elastic storage ratio and the loss storage ratio can be expressed on a Gaussian plane since having a mutually independent reiationship. When a storage elastic modulus L' is a real number component and a loss elastic modulus L" is an imaginary number component, by the use of the storage elastic modulus L' and the loss elastic modulus L" on the Gaussian plane, an amplitude value $\delta$ is expressed by: Loss tangent $\tan \delta = L" / L'$.

Further, by the use of the loss tangent $\tan \delta$ which shows the viscoelastic characteristic, the frictional coefficient of the material is expressed by: Frictional coefficient $\mu(f) = A \tan \delta(f) + B$, where A(> 0) and B are conversion constants depending upon the material. It is to be noted that, since a frictional coefficient depends upon a frequency, a loss tangent is defined with respect to each frequency. Meanwhile, the conversion constants A and B are fixed values specific to a material not depending upon the frequency. Further, the above expression for obtaining the frictional coefficient $\mu(f)$ may be an experientially acquired polynomial expression or high-degree expression using $\tan \delta$.

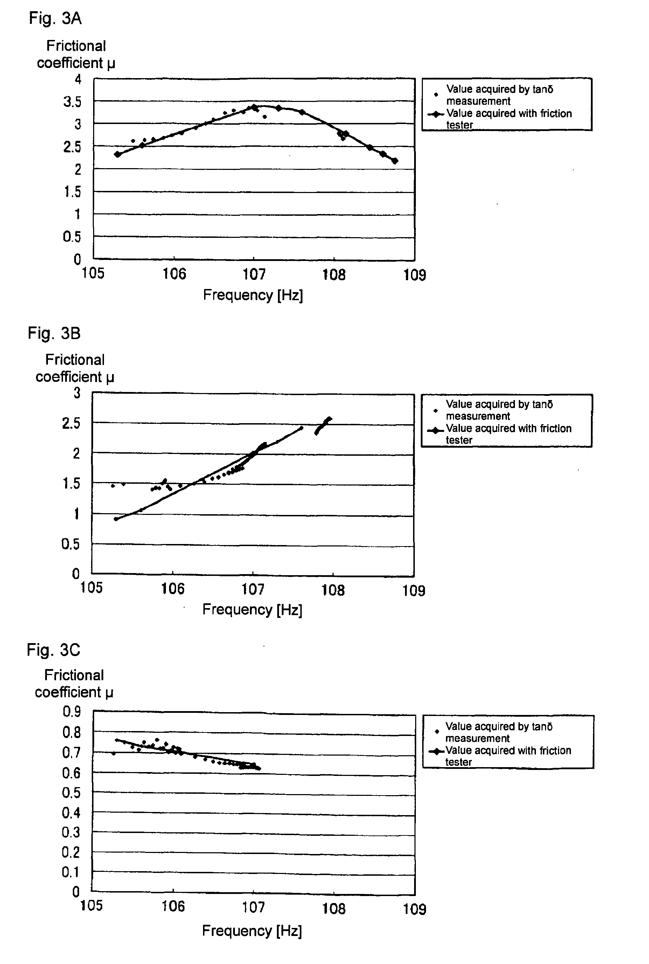

FIG. 3 shows a view comparing frictional coefficients calculated from loss tangents with frictional coefficients measured with the use of a conventional frictional characteristic measuring apparatus. It is to be noted that the conventional frictional characteristic measuring apparatus is the same apparatus as the frictional characteristic measuring apparatus disclosed in Japan Patent No. 3215579.

FIG. 3A shows the case of styrene-butadiene rubber (SBR).
FIG. 3B shows the case of butadiene rubber (BR).
FIG. 3C shows the case of polynorbornene rubber (PNR).

With reference to FIG. 3A, in the case of the styrene-butadiene rubber, a frictional characteristic that the frequency has its peak in the vicinity of a frequency of $10^7$ Hz is acquired with the use of a friction tester. Meanwhile, it is found that the frictional characteristic calculated from the loss tangent is almost the same characteristic as the above-described characteristic.

With reference to FIG. 3B, in the case of butadiene rubber, the frictional characteristic is acquired by the friction tester that the frictional coefficient increases with increase in frequency. Meanwhile, it is found that the frictional characteristic calculated from the loss tangent is almost the same characteristic as the above-described characteristic.

With reference to FIG. 3C, in the case of polynorbornene rubber, the frictional characteristic that the frictional coefficient decreases with increase in frequency is acquired with the use of the friction tester. Meanwhile, it is found that the frictional characteristic calculated from the loss tangent is almost the same characteristic as the above-described characteristic.

As thus described, it is found that the frictional characteristic calculated from the loss tangent has high reproducibility with respect to any of the frictional characteristics of the respective materials as thus described. Namely, it device that a frictional characteristic of a material can be calculated based upon a loss tangent.

(Calculation of loss tangent)

In Embodiment 1, a surface reflection method is used where a sound wave is emitted to an object to be measured, and based upon a reflected sound wave generated by reflection of the emitted sound wave on the object to be measured, a loss tangent is measured.

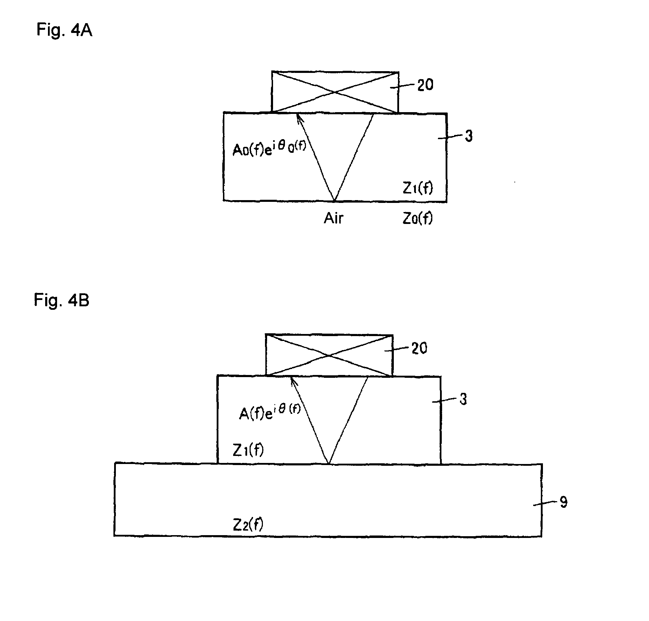

FIG. 4 shows a view for explaining a method for deriving a loss tangent according to the surface reflection method.

FIG. 4A is the case of acquiring a reference value.
FIG. 4B is the case of deriving a loss tangent of the object 9 to be measured.

First, acoustic impedance is introduced for expressing a frictional characteristic of the incident sound wave, emitted from the transducer 20 of the sensor section 2, on the delay member 3 and the object 9 to be measured.
With reference to FIG. 4A, in the case of acquiring a reference value, the frictional characteristic measuring apparatus 100 emits an incident sound wave from the transducer 20 in a state where the object 9 to be measured is not present.
Here, when the frequency of the incident sound wave and the reflected sound wave is f, acoustic impedance of the delay member 3 depending upon the frequency f can be expressed as $Z_1(f)$. Further, acoustic impedance in the air can be expressed as $Z_0(f)$. It is to be noted that the acoustic impedance $Z_0(f)$ and $Z_1(f)$ are complex numbers. Moreover, the reflectance $R_{01}(f)$ of the incident sound wave on the interface between the delay member 3 and the air can be expressed by an expression (1).

$$\text{Reflectance } R_{01}(f) = (Z_0(f) - Z_1(f)) / (Z_0(f) + Z_1(f)) \ \ldots (1)$$

Since the acoustic impedance $Z_0(f)$ in the air is sufficiently small as compared with the acoustic impedance $Z_1(f)$ on the delay member 3 and the object 9 to be measured, "$Z_0(f) < Z_1(f)$" can be considered to hold regardless of the frequency f, and thereby "Reflectance $R_{01}(f) = -1$" holds. Namely, the entire incident sound wave is reflected on the interface between the delay member 3 and the air.
Here, the reflected sound wave incident on the transducer 20 is expressed as $A_0(f)\exp(i\theta_0(f))$, where i is an imaginary number unit, $A_0(f)$ is an amplitude value (real value) at each frequency, and $\theta_0(f)$ is a phase ($0 \leq \theta_0(f) < \infty$) at each frequency. Since the entire incident sound wave is reflected on the interface between the delay member 3 and the air, the incident sound wave emitted from the sensor section 2 to the object 9 to be measured through the delay member 3 is expressed by an expression (2).

$$A_0(f)\exp(i\theta_0(f)) \times R_{01}(f) = -A_0(f)\exp(i\theta_0(f)) \ \ldots (2)$$

Namely, the frictional characteristic measuring apparatus 100 regards the incident sound wave expressed by the expression (2) to be emitted to the object to be measured, and stores $A_0(f)$ and $\theta_0(f)$, which constitute the expression (2), as reference values.
Meanwhile, with reference to FIG. 4B, in the case of deriving the loss tangent of the object 9 to be measured, the object 9 to be measured is brought into intimate contact with the delay member 3, the same incident sound wave as in the case of FIG. 4A is emitted from the transducer 20. Then, the reflected sound wave generated by reflection of the sound wave on the interface between the delay member 3 and the object 9 to be measured is compared with the stored reference value to calculate the loss tangent, i.e. the frictional characteristic, of the object 9 to be measured.
When the acoustic impedance of the object 9 to be measured is $Z_2(f)$, a reflectance $R_{12}(f)$ of the incident sound wave on the interface between the delay member 3 and the object 9 to be measured can be expressed by an expression (3).

$$\text{Reference } R_{12}(f) = (Z_2(f) - Z_1(f)) / (Z_2(f) + Z_1(f)) \ \ldots (3)$$

Further, the expression (3) can be transformed to derive an expression (4).

$$Z_2(f) = Z_1(f) \times (1 + R_{12}(f)) / (1 - R_{12}(f)) \dots (4)$$

Here, the reflected sound wave incident on the transducer 20 is expressed as $A(f)\exp(i\theta(f))$, where i is an imaginary number unit, $A_0(f)$ is an amplitude value (real value) at each frequency, and $\theta$ is a phase ($0 \leq \theta_0 < \infty$). Then, an expression (5) is established by the use of the reference value shown in the expression (2).

$$A(f)\exp(i\theta(f)) = -A_0(f)\exp(i\theta_0(f)) \times R_{12}(f)$$

Further, the expression (5) can be transformed to derive an expression (6).

$$R_{12}(f) = -A(f) / A_0(f) \times \exp(i(\theta(f) - \theta_0(f))) \dots (6)$$

Further, the expression (6) can be substituted into the expression (4) to derive an expression (7).

$$Z_2(f) = Z_1(f) \times (1 - A(f) / A_0(f) \times \exp(i(\theta(f) - \theta_0(f))) / (1 + A(f) / A_0(f) \times$$

$$\exp(i(\theta(f) - \theta_0(f))) \dots (7)$$

Here, there holds a relation shown by an expression (8) between the storage elastic modulus L' and the loss elastic modulus L" of the object to be measured, and acoustic impedance $Z_2(f)$ and a density $p_2$.

$$L' + iL''(f) \quad = Z_2(f)^2 / p_2 \dots (8)$$

The expression (7) is substituted into the (8) to separate the real number component and the imaginary number component, and thereby the loss tangent $\tan \delta(f)$ is expressed by an expression (9).

$$\tan \delta(f) = L'' / L' = \{4 \times (A(f) / A_0(f)) \times (1 - (A(f) / A_0(f))^2) \times \sin(\theta(f) - \theta_0(f))\} /$$

$$\{(1 - A(f) / A_0(f))^2)^2 - 4 \times (A(f) / A_0(f))^2 \times \sin^2(\theta(f) - \theta_0(f))\} \dots (9)$$

As shown in the expression (9), the loss tangent $\tan \delta(f)$ is consist of $\{A(f) / A_0(f)\}$, $\{\theta(f) - \theta_0(f)\}$ with $A_0(f)$, $\theta_0(f)$ set as reference values. Namely, comparison of the reflected sound wave generated on the object to be measured with the previously acquired reference value allows derivation of a loss tangent of the object to be measured. Further, as described above, since the loss tangent of the object to be measured depends upon the frequency, the frictional characteristic measuring apparatus 100 derives the loss tangent at every frequency component.

It should be noted that, when a loss tangent at high frequency is required, a sound wave emitted from the transducer 20 is an ultrasound wave.

(Measurement flow of frictional characteristic)

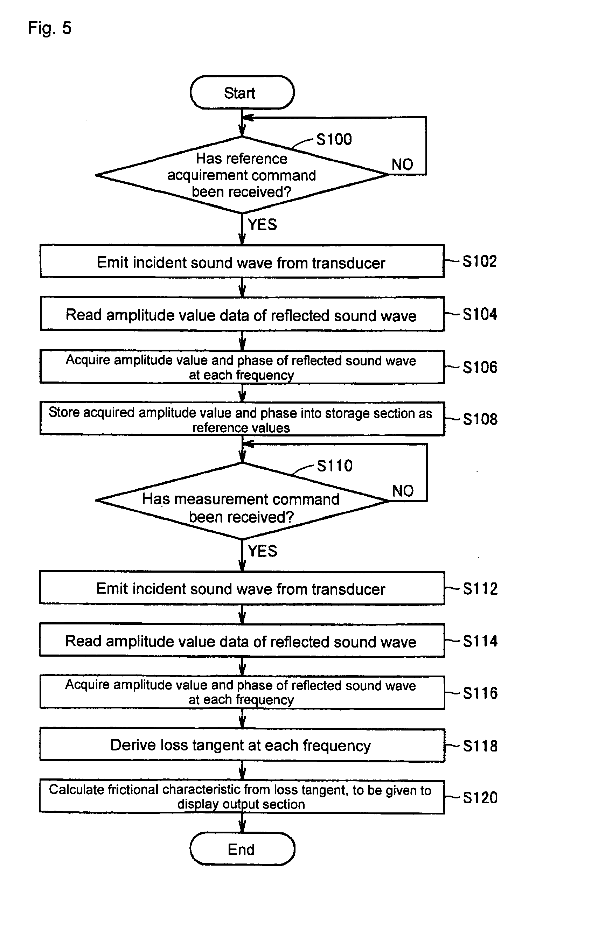

FIG. 5 shows a flowchart for measuring a frictional characteristic.

With reference to FIG. 1 and FIG. 5, the operating section 10 determines whether or not to have received a reference acquirement command through the input section 18 (Step S100). When having received no reference acquirement command (when NO in Step S100), the operating section 10 waits until receiving the reference acquirement command (Step S100).

When having received the reference acquirement command (when YES in Step S100), the operating section 10 gives an emission command to the transmission control circuit 22 and allows the incident sound wave to be emitted from the transducer 20 (Step S102).

Subsequently, the operating section 10 reads the time wave form data of a reflected sound wave received by the transducer 20 from the time data memory section 12 (Step S104). The operating section 10 then performs FFT processing on the time waveform data of the read reflected sound wave, to acquire an amplitude value and a phase of the reflected sound wave at each frequency (Step S106). Further, the operating section 10 stores the acquired amplitude value and phase of the reflected sound wave at each frequency into the storage section 14 as reference values (Step S108).

Next, the operating section 10 determines whether or not to have received a measurement command through the input section 18 (Step S110). Meanwhile, the user arranges the sensor section 2 in intimate contact with the object to be measured, or arranges the object to be measured in intimate contact with the sensor section 2, and thereafter gives the measurement command.

When having received no reference acquirement command (when NO in Step S110), the operating section 10 waits until receiving the reference acquirement command (Step S110).

When having received a measurement command (when YES in Step S110), the operating section 10 gives an emission command to the transmission control circuit 22 and allows the incident sound wave to be emitted from the transducer 20 (Step S112).

Subsequently, the operating section 10 reads the time wave form data of a reflected sound wave received by the transducer 20 from the time data memory section 12 (Step S114). The operating section 10 then performs FFT processing on the time waveform data of the read reflected sound wave, to acquire an amplitude value and a phase of the reflected sound wave at each frequency (Step S116). Further, the operating section 10 reads the amplitude value and the phase as the reference values from the storage section 14, and compares those values with the acquired amplitude value and phase, to derive a loss tangent at each frequency (Step S118).

The operating section 10 then calculates a frictional characteristic from the derived loss tangent at each frequency, and gives the frictional characteristic to the display output section 16 (Step S120). Thereby, the user can be notified of the calculated frictional characteristic through the display output section 16.

It is to be noted that in the aforesaid processing, a configuration may be employed where a plurality of reference values are previously stored into the storage section 14 and the user sets up which reference value is to be adopted at the time of measurement, in place of the configuration of acquiring a reference value in every measurement.

(Determination of deterioration state)

A rubber product and the like deteriorate over time under influences of a temperature, ultraviolet rays and the like, and the frictional characteristics thereof also deteriorate. In the case of a tire and the like, for example, frictional force with respect to a road surface decreases associated with deterioration in frictional characteristic, which might degrade a traveling performance of a vehicle to harm life of a person on board.

Therefore, the frictional characteristic measuring apparatus 100 calculates a change over time in frictional characteristic of the object to be measured and compares the calculated characteristic with the frictional characteristic as the reference, to determine the deterioration state of the object to be measured.

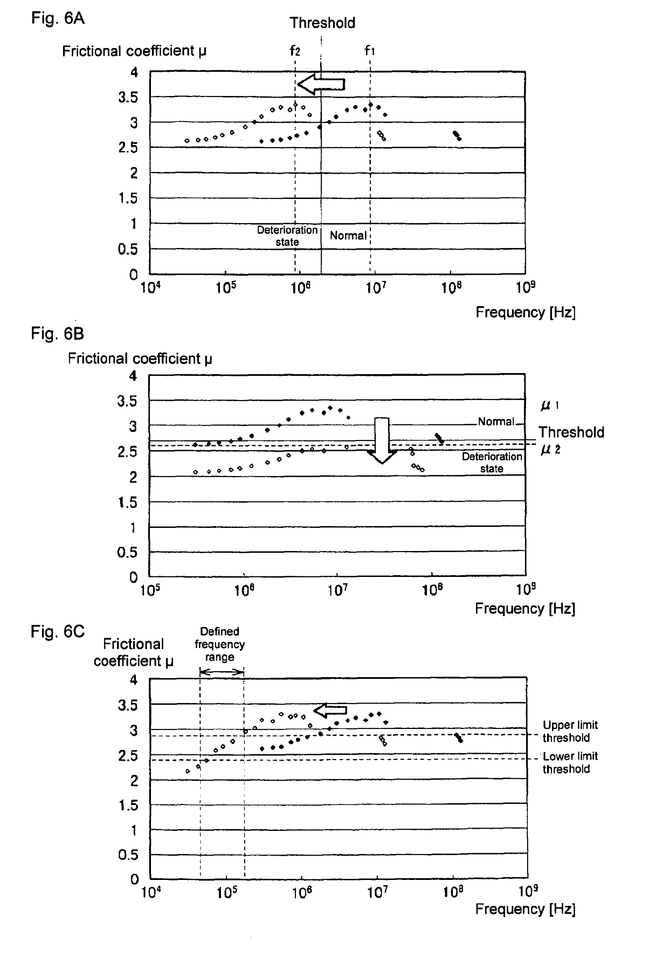

FIG. 6 shows a view for explaining deterioration modes of the frictional characteristic of the object to be measured.

FIG. 6A shows a mode in which a peak frequency of the frictional characteristic shifts.
FIG. 6B shows a mode in which a peak value of the frictional characteristic shifts.
FIG. 6C shows a mode in which the peak is not detected and the entire frictional characteristic changes.

With reference to FIG. 6A, the peak frequency of the frictional characteristic of the object to be measured immediately after production is $f_1$, whereas the peak frequency of the frictional characteristic of the object to be measured which deteriorated over time shifts to $f_2$ ($f_2 < f_1$). It is therefore possible to determine the deterioration state of the object to be measured based upon whether or not the peak frequency of the frictional characteristic exceeds a frequency of a threshold.

In the meantime, there may occur a case where the peak value of the frictional characteristic shifts according to a material of a product.

With reference to FIG. 6B, the peak value of the frictional characteristic of the object to be measured immediately after production is $\mu_1$, whereas the peak value of the frictional characteristic of the object to be measured which deteriorated over time shifts to $\mu_2$ ($\mu_2 < \mu_1$). It is therefore possible to determine the deterioration state of the object to be measured based upon whether or not the peak value of the frictional characteristic exceeds a frictional coefficient of the threshold.

Further, there also exists a case where neither the peak frequency nor the peak value is detected. In such a case, the deterioration state can be determined from the entire shape of the frictional characteristic.

With reference to FIG. 6C, in the case where neither the peak frequency nor the peak value is detected, a defined frequency range is set as a reference for determination, and the deterioration state of the frictional characteristic is determined based upon a change in entire shape of the frictional characteristic within the defined frequency range. Namely, associated with the deterioration, the frictional characteristic crosses over an upper limit threshold or a lower limit threshold within the defined frequency range. It is therefore possible to determine the quality of the object to be measured based upon whether or not the frictional characteristic exceeds the upper limit threshold, or whether or not the frictional characteristic exceeds the lower limit threshold in the defined frequency range.

Accordingly, the frictional characteristic measuring apparatus 100, by way of example, determines the deterioration state by comparing both the calculated peak frequency and peak value of the frictional characteristic with the thresholds.

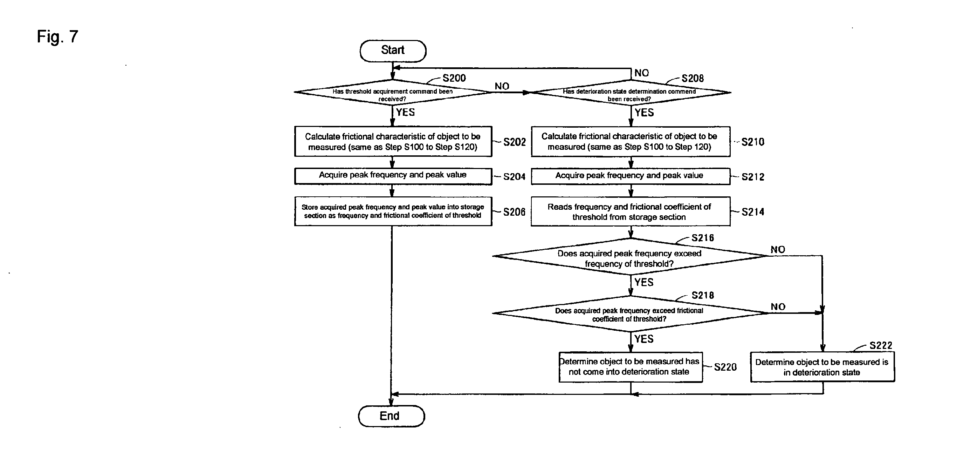

FIG. 7 shows a flowchart for determining the deterioration state of the object to be measured.
With respect to FIG. 1 and FIG. 7, the operating section 10 determines whether or not to have received a threshold acquirement command through the input section 18 (Step S200).

Here, the user arranges an object to be measured immediately after production or an object to be measured with prescribed performance, so as to be in intimate contact with the sensor section 2, and thereafter gives a threshold acquirement commend.

When having received the threshold acquirement command (when YES in Step S200), the operating section 10 performs the same processing as in Step S100 to Step S120 shown in FIG. 5, to calculate the frictional characteristic of the object to be measured (Step S202). The operating section 10 searches a frequency at which the frictional coefficient is the maximum value among the calculated values of the frictional characteristic of the object to be measured, to acquire the peak frequency and the peak value of the frictional characteristic (Step S204). Further, the operating section 10 stores the acquired peak frequency and peak value into the storage section 14, respectively as a frequency and a frictional coefficient of a threshold (Step S206). The operating section 10 then completes its processing.

In the meantime, when having received no threshold acquirement command (No in Step S200), the operating section 10 determines whether or not to have received a deterioration state determination command (Step S208).

Here, the user arranges an object to be measured, the deterioration state of which is intended to be determined, so as to be in intimate contact with the sensor section 2, and thereafter gives a deterioration state determination commend.

When having received the threshold acquirement command (when YES in Step S208), the operating section 10 performs the same processing as in Step S100 to Step S120 shown in FIG. 5, to calculate the frictional characteristic of the object to be measured (Step S210). The operating section 10 searches a frequency at which the frictional coefficient is the maximum value among the calculated values of the frictional characteristic of the object to be measured, to acquire the peak frequency and the peak value of the frictional characteristic (Step S212). Further, the operating section 10 reads the frequency and the frictional coefficient of the threshold from the storage section 14 (Step S214).

Subsequently, the operating section 10 determines whether or not the acquired peak frequency exceeds the frequency of the threshold (Step S216).

When the acquired peak frequency exceeds the frequency of the threshold (when YES in Step S216), the operating section 10 determines whether or not the acquired peak value exceeds the frictional coefficient of the threshold (Step S218).

When the acquired peak value exceeds the frictional coefficient of the threshold (when YES in Step S218), the operating section 10 determines that the object to be measured has not come into the deterioration state, and gives such a determination result to the display output section 16 (Step S220). The operating section 10 then completes its processing.

When the acquired peak frequency does not exceed the frequency of the threshold (when NO in Step S216), or when the acquired peak value does not exceed the frictional coefficient of the threshold (when NO in Step S218), the operating section 10 determines that the object to be measured is in the deterioration state, and gives such determination result to the display output section 16 (Step S222). The operating section 10 then completes its processing.

The user can be notified of the determination result of the deterioration state through the display output section 16.
It should be noted that a configuration where the object to be measured itself has a threshold in place of the configuration where the frequency and the frictional coefficient of the threshold are stored into the storage section 14.

(Modified Example)

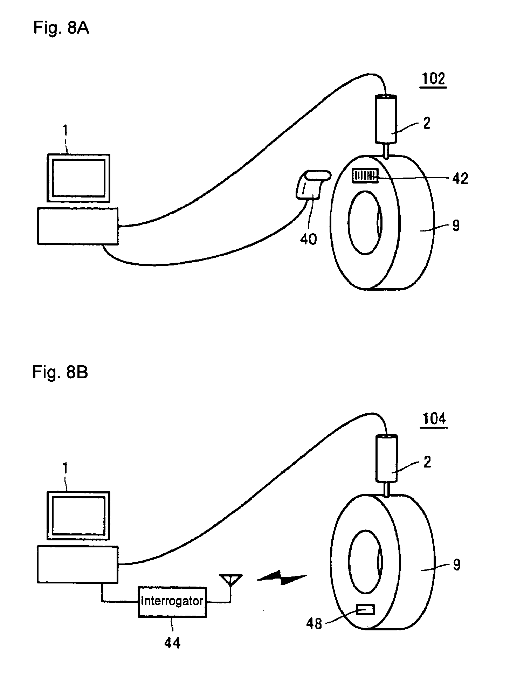

FIG. 8 shows a view of a modified example of Embodiment 1.

FIG. 8A shows Modified Example 1 of Embodiment 1.
FIG. 8B shows Modified Example 2 of Embodiment 1.

With reference to FIG. 8A, a frictional characteristic measuring apparatus 102 according to Modified Example 1 of Embodiment 1 is configured by addition of a barcode reader 40 to the frictional characteristic measuring apparatus 100 according to Embodiment 1.

Further, the side face of a tire as one example of the object 9 to be measured is provided with a barcode 42 for storing a threshold. A producer of the tire, or the like, provides the surface of the tire with the barcode 42 for storing a frequency and a frictional coefficient of the threshold based upon a previously calculated frictional characteristic, by the time of production of the tire.

The frictional characteristic measuring apparatus 102 reads the barcode 42 provided on the object 9 to be measured through the barcode reader 40, to acquire the frequency and the frictional coefficient of the threshold to be stored into the barcode 42. The frictional characteristic measuring apparatus 102 then compares the calculated frictional characteristic with the frequency and the frictional coefficient of the threshold, acquired from the barcode 42, to determine the deterioration of the object 9 to be measured.

With reference to FIG. 8B, a frictional characteristic measuring apparatus 104 is configured by addition of an interrogator 44 to the frictional characteristic measuring apparatus 100 according to Embodiment 1.

Further, the side face or the inside of a tire as one example of the object 9 to be measured is provided with a wireless tag (RFID) 56 for storing a threshold or the like. A producer of the tire, or the like, provides the surface or the inside of the tire with the wireless tag 48 for storing a frequency and a frictional coefficient of the threshold based upon the previously calculated frictional characteristic, by the time of production of the tire.

the frictional characteristic measuring apparatus 104 transmits an inquiry signal to the wireless tag 48 provided on the object 9 to be measured through the interrogator 44, to acquire from a respond signal the stored frequency and the frictional coefficient of the threshold. The frictional characteristic measuring apparatus 104 then compares the calculated frictional characteristic with the frequency and the frictional coefficient of the threshold, acquired from the wireless tag 48, to determine the deterioration state of the object 9 to be measured.

It should be noted that, while the configuration was described above which determines both shifts of the peak frequency and the peak value of the frictional characteristic, the configuration is not limited to this. Namely, a configuration may be employed which determines either one of the shifts of the peak frequency and the peak value of the frictional characteristic.

(Quality determination)

In a production line on which the same kinds of products are successively produced, it is possible to determine the quality of each of half-finished products in the process or pre-shipment products by calculation of frictional characteristics of those products.

As in the aforesaid determination of the deterioration state, the operating section 10 compares a previously set frictional characteristic with a calculated frictional characteristic of each product to make quality determination. Namely, the operating section 10 calculates the frictional characteristic of the object to be measured to acquire the peak frequency and the peak frictional coefficient thereof in the same procedure as described above. The operating section 10 then determines whether or not the acquired peak frequency and peak frictional coefficient fall within the prescribed range. Based upon the determination result, the operating section 10 determines the object to be measured as a non-defective product when the peak frequency and the peak frictional coefficient are both within the prescribed range, whereas the operating section 10 determines the object to be measured as a defective product when either the peak frequency or the peak frictional coefficient is out of the prescribed range.

(Calibration of conversion constant)

As thus described, in the case of making the deterioration state determination or the quality determination, since such determination is made based upon a change in frictional characteristic of the object to be measured, the loss tangent tan $\delta$ is favorably measured with accuracy, while conversion constants A and B for calculating the frictional coefficient $\mu$ are not highly important. On the other hand, in the case of acquiring an absolute value of the frictional characteristic of the object to be measured, the conversion constants A and B are important in addition to the loss tangent tan $\delta$.

Accordingly, the frictional characteristic measuring apparatus 100 calibrates the conversion constants A and B by calculating a loss tangent tan $\delta$ of a calibration reference with a known frictional coefficient. Namely, the operational processing section 1 previously derives a loss tangent of the calibration reference with a known frictional coefficient correspondingly to a calibration reference acquirement command from the user, and determines the conversion constants A and B such that a frictional coefficient calculated from the derived loss tangent has the highest correlation with the known frictional coefficient.

It is to be noted that, since the frictional coefficient depends upon the frequency, the frictional coefficient of the calibration reference in a further wider frequency region is desirably known for enhancing the accuracies of the conversion constants A and B, but the conversion constants A and B can be calibrated when the frictional coefficients with respect to at least two frequencies are known.

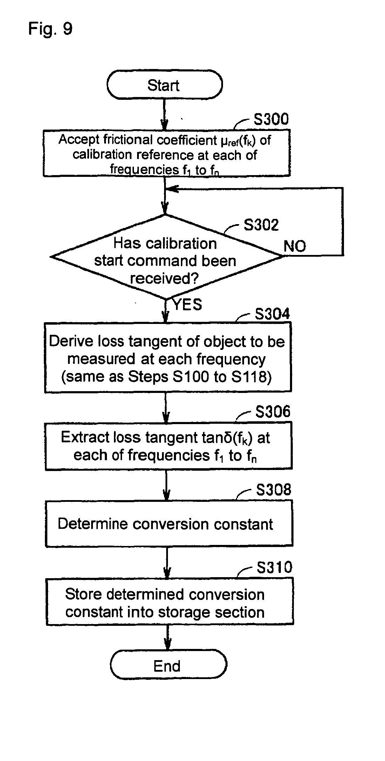

FIG. 9 shows a flowchart for calibrating the conversion constant.

With reference to FIG. 1 and FIG. 9, the operating section 10 accepts a frictional coefficient $\mu_{ref}(f_k)$ of the calibration reference at frequencies $f_1$ to $f_n$ through the input section 18 (Step S300). Here, the user gives a frictional coefficient of the calibration reference at a prescribed frequency.

Next, the operating section 10 determines whether or not to have received a calibration start command through the input section 18 (Step S302)

When having received no calibration start command (when NO in Step S302), the operating section 10 waits until receiving the calibration start command (Step S302).

When having received the calibration start command (when YES in Step S302), the operating section 10 performs the same procedure as in Step S100 to Step S118 shown in FIG. 5, to derive a loss tangent at each frequency (Step S304). It should be noted that the user arranges the calibration reference so as to be in intimate contact with the sensor section 2 in Step S110 shown in Fig. 5, and thereafter gives a measurement command.

Subsequently, the operating section 10 extracts from the derived loss tangents of the object to be measured a loss tangent tan $\delta(f_k)$ at each of the frequencies $f_1$ to $f_n$ received through the input section 18 (Step S306). Further, the operating section 10 determines the conversion constants A and B so as to maximize a correlation coefficient between the frictional coefficient $\mu_{ref}(f_n)$ of the calibration reference received through the input section 18 and the frictional coefficient $\mu(f_k)$ calculated from the loss tangent: Frictional coefficient $\mu(f_k) = A \tan \delta(f_k) + B$ (Step S308).

The operating section 10 eventually stores the determined conversion constants A and B into the storage section 14 (Step S31 0). The operating section 10 then completes its processing.

In the aforesaid processing, the operating section 10, for example, uses a least square method for determining conversion constants A and B having the maximum correlation coefficient.

According to Embodiment 1 of the present invention, an incident sound wave is emitted from the sensor section to the object to be measured, and based upon a reflected sound wave generated by reflection on the object to be measured, a loss tangent of a viscoelastic characteristic of the object to be measured is acquired. A frictional characteristic of the object to be measured is then calculated from the acquired loss tangent. It is thus possible to calculate the frictional characteristic only by bringing the sensor section into intimate contact with the surface of the object to be measured, so as to calculate the frictional characteristic with ease as compared with the case of forming a test specimen or the like to measure the frictional characteristic. It is thereby possible to realize the frictional characteristic measuring apparatus for calculating a frictional characteristic of an object to be measured in a non-destructive manner.

Further, according to Embodiment 1 of the present invention, the deterioration state or the quality of the object to be measured can be determined based upon a change in peak frequency or peak value of the frictional characteristic which is derived from the loss tangent. It is therefore possible to control the deterioration state or the quality of a product to be measured or the like at a higher level.

Further, according to Embodiment 1 of the present invention, a loss tangent of a constitutional reference with a known frictional characteristic is measured, and a conversion constant for converting a loss tangent into a frictional coefficient can be calibrated such that a frictional coefficient calculated from the measurement result is reproduced with higher accuracy than the known frictional coefficient. Accordingly, since an absolute frictional characteristic can be measured with high accuracy, it is possible not only to perform relative estimation of the frictional characteristic, but also to realize absolute estimation of the frictional characteristic.

[Embodiment 2]

In Embodiment 1 above, the configuration was described where the sensor section and the operational processing section are connected to each other through a cable. In Embodiment 2, a configuration is described where the sensor section and operational processing section are connected with each other through a wireless signal.

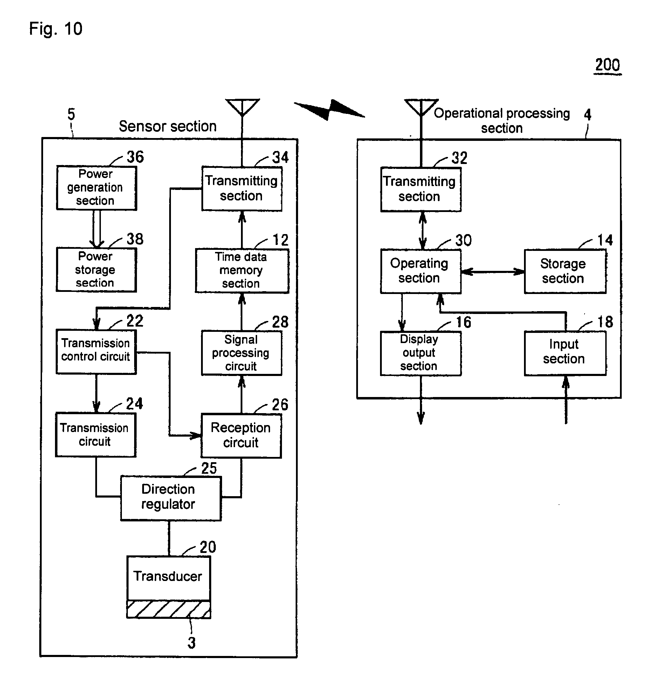

FIG. 10 shows a schematic constitutional view of a frictional characteristic measuring apparatus 200 according to Embodiment 2.

With reference to FIG. 10, the frictional characteristic measuring apparatus 200 is comprised of an operational processing section 4 and a sensor section 5.

The operational processing section 4 is comprised of a transmitting section 32, an operating section 30, the display output section 16, the storage section 14 and the input section 18.

Upon receipt of a measurement command through the input section 18, the operating section 30 gives an emission command to the transmitting section 32, and also receives time waveform data of a reflected sound wave through the transmitting section 32. Since the remaining portion is the same as that of the operating section 10 in Embodiment 1, the specific description of such processing is not repeated.

Upon receipt of an emission command from the operating section 10, the transmitting section 32 modulates the emission command into a wireless signal, and transmits the signal to the sensor section 5. Further, the transmitting section 32 modulates the wireless signal received from the sensor section 5 into time waveform data of the reflected sound wave, and outputs the data to the operating section 30.

Upon receipt of a measurement command from the outside through the input section 18, the operating section 30 gives an emission command to the sensor section 2 through the transmitting section 32. The operating section 10 then reads time wave form data of the reflected sound wave through the transmitting section 32. Since the remaining portion is the same as that of the frictional characteristic measuring apparatus 100 according to Embodiment 1, the specific description of such processing is not repeated.

Since the display output section 16, the storage section 14 and the input section 18 are the same as those in Embodiment 1, the specific descriptions thereof are not repeated.

Meanwhile, the sensor section 5 is comprised of a transmitting section 34, a power storage section 38, a power generation section 36, the time data memory section 12, the transmission control circuit 22, the transmission circuit 24, the direction regulator 25, the transducer 20, the reception circuit 26, and the signal processing circuit 28.

The transmitting section 34 modulates the wireless signal transmitted from the operational processing section 4, and outputs an emission command to the transmission control circuit 22. Further, the transmitting section 34 modulates the time waveform data of the reflected sound wave, outputted from the time data memory section 12, into a wireless signal and transmits the signal to the operational processing section 4.

The power storage section 38 stores electric power supplied from the power generation section 36, and supplies the electric power to each block of the sensor section 5. By way of example, the power storage section 38 is comprised of a secondary battery such as a nickel hydride battery or a lithium ion battery, a storage element such as an electric double layer capacitor (super capacitor), and the like.

The power generation section 36 supplies electric power of the sensor section 5 when the sensor section 5 is arranged on the object to be measured or at a place to be measured where suppiy of external power is difficult. By way of example, the power generation section 36 is made of a solar cell which converts light energy into electric energy, a dynamo which converts its own rotational energy into electric energy, a rectifying element which converts electromagnetic wave energy such as microwaves supplied from the outside into electric energy, or the like.

Since the time data memory section 12, the transmission control circuit 22, the transmission circuit 24, the direction regulator 25, the transducer 20, the reception circuit 26 and the signal processing circuit 28 are the same as those in Embodiment 1, the specific descriptions thereof are not repeated.

It should be noted that, when the external power can be supplied to the sensor section 5, the power generation section 36 and the power storage section 38 are not necessarily required.

As thus described, the frictional characteristic measuring apparatus 200 has a small limitation to a place for arranging the sensor section 5 as compared with the frictional characteristic measuring apparatus 100 according to Embodiment 1. For example, incorporation of the sensor section 5 into the object to be measured enables constant measurement of the frictional characteristic of the object to be measured. This thereby enables successive determination of the deterioration state of the object to be measured.

Further, the frictional characteristic measuring apparatus 200 may be comprised of a plurality of sensor sections 5 with respect to one operational processing section 4 in addition to the case of being comprised of one sensor section 5 with respect to one operational processing section 4.

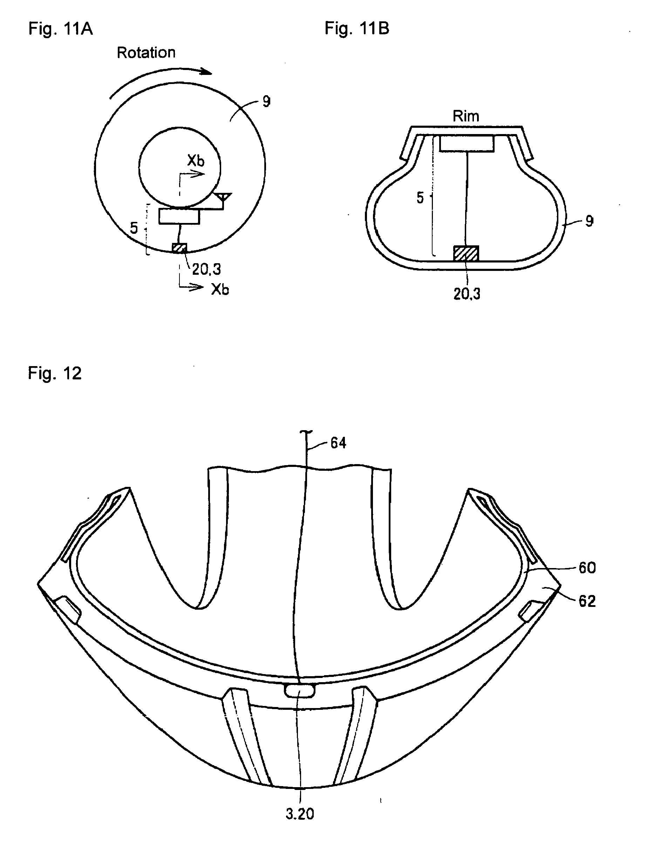

FIG. 11 shows a view of an arrangement example of the sensor section 5.

FIG. 11A shows a side view of the object 9 to be measured.
FIG. 11B shows an Xb-Xb sectional view of FIG. 11A.

With reference to FIG. 11A and FIG. 11B, when the object 9 to be measured is a tire, incorporation of the sensor section 5 into the inside (air filling section) of the object 9 to be measured enables constant measurement of the frictional characteristic of the object 9 to be measured. Further, for example, the transducer 20 and the delay member 3 which constitute the sensor section 5 are arranged on the rear face or the main body of the tire, and the portion of the sensor section 5 other than the transducer 20 and the delay member 3 is arranged on a rim (wheel).

FIG. 12 shows a sectional view of a tire in which the transducer 20 is arranged.
With reference to FIG. 12, the integrated combination of the transducer 20 and the delay member 3 is inserted in between a tread section 62 constituting the external surface of the tire and a carcass 60 in intimate contact with the tread section 62. The transducer 20 then emits an incident sound wave in direction toward the external diameter of the tire.

Further, the transducer 20 is connected with the sensor section 25 through a conducting wire.

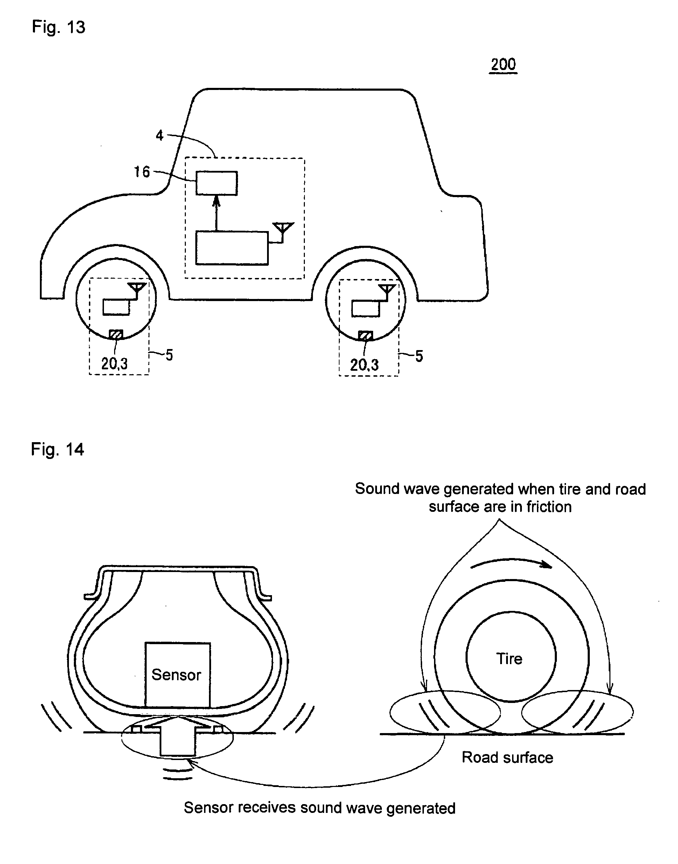

FIG. 13 shows a vehicle comprising the frictional characteristic measuring apparatus 200. It is to be noted that FIG. 13 shows the frictional characteristic measuring apparatus 200 comprised of one operational processing section 4 and a plurality of sensor sections 5.

With reference to FIG. 13, the sensor section 5 is arranged inside the tire as in FIG. 11, and in response to an emission command from the operational processing section 4, the sensor section 5 emits an incident sound wave, and transmits time waveform data of the reflected sound wave to the operational processing section 4.

Upon receipt of a command to start deterioration state determination from the user, or upon detection of start of a vehicle engine, the operating section 30 (not shown) of the operational processing section 4 transmits an emission command to each of the sensor sections 5. The operating section 30 performs processing for determining the deterioration state of the frictional characteristic shown in FIG. 7 based upon time waveform data of the reflected sound wave received from each of the sensor sections 5, to determine the deterioration state of each tire. Moreover, the operating section 30 notifies the driver of a determination result of the deterioration state of each tire.

It should be noted that, since a time constant of deterioration in tire is considered to be relatively long, frequent emission of the incident sound wave from the sensor section 5 is not necessary, and the frictional characteristic of each tire is calculated, for example, at the time of starting the engine and in each prescribed cycle (e.g. one-hour cycle) during operation of the engine.

As shown in FIG. 5, for calculation of the frictional characteristic of the tire as the object to be measured, an amplitude value and a phase at each frequency are required as reference values. However, when the arrangement is made inside the tire as shown in FIG. 12, it is difficult to acquire such reference values.

Thereat, as shown in FIG. 8B, a wireless tag can be provided on the tire as the object 9 to be measured to store the amplitude value and the phase at each frequency as the reference values along with a frequency and a frictional coefficient of a threshold.

(Detection of slipping state)

As thus described, when the sensor section 5 is arranged inside the tire as the object 9 to be measured and the deterioration state of the frictional characteristic is determined, it is not necessary to frequently calculate the frictional characteristic. Therefore, during the time where the calculation of the frictional characteristic is paused, the slipping state of the object 9 to be measured can be detected based upon an acquired sound wave other than the reflected sound wave.

Again with reference to FIG. 13, the tire installed on the vehicle generates frictional force against reactive force, centrifugal force and the like according to acceleration/deceleration and a rudder angle of the vehicle. However, the tire slips when becoming incapable of generating necessary frictional force due to a frictional characteristic of the tire, the road surface condition, and the like. When such slip occurs, friction between the tire and the road surface causes generation of a slipping sound wave (audible sound and ultrasonic wave).

FIG. 14 shows a view for explaining detection of the slipping state.

With reference to FIG. 14, the sensor section 5 is arranged inside the tire, and further, the transducer 20 and the retardation member 3 as part of the sensor section 5 are arranged on a tread section of the tire, thereby allowing easy reception of the slipping sound wave generated by friction between the tire and the road surface.

Again with reference to FIG. 10, in the sensor section 5, the transducer 20 receives the slipping sound wave generated by friction between the tire and the road surface. The time data memory section 12 receives the time waveform of the slipping sound wave received by the transducer 20 through the direction regulator 25, the reception circuit 26 and the signal processing circuit 28, and stores the time waveform in a prescribed cycle. Further, the transmitting section 34 transmits the time waveform data of the slipping sound wave stored in the time data memory section 12 to the operational processing section 4.

In the operational processing section 4, the transmitting section 32 outputs to the operating section 30 the time waveform data of the slipping sound wave transmitted from the sensor section 5. The operating section 30 then performs FFT processing on the time waveform data of the slipping sound wave received from the transmitting section 32 to detect the slipping state based upon frequency components of the data.

The amplitude value and the frequency characteristic of the slipping sound wave, generated by friction between the tire and the road surface, change according to the slipping state. For example, the amplitude value increases according to a slip occurrence amount and the frequency changes according to the number of rotation of the tire. Therefore, the operating section 30 performs FFT processing on the slipping sound wave. Based upon the amplitude value and the frequency characteristic thereof, the operating section 30 detects the slipping state (slip amount, slip mode). Further, the storage section 14 stores reference data for detecting the slipping state, and the operating section 30 compares the reference data read from the storage section 14 with the slipping sound wave subjected to the FFT processing.

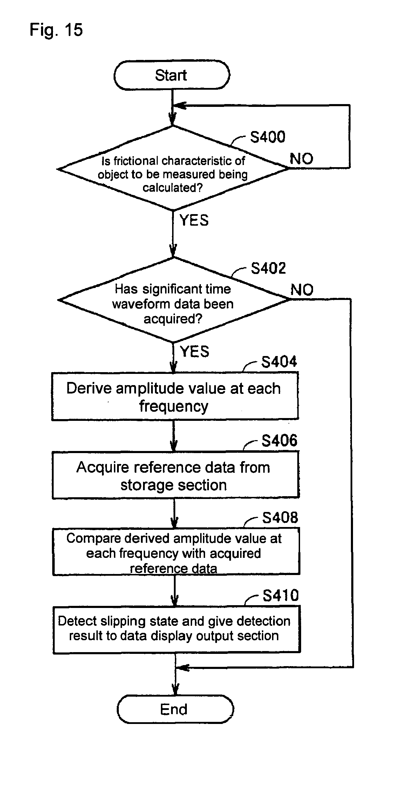

FIG. 15 shows a flowchart for detecting the slipping state.

With reference to FIG. 10 and FIG. 15, the operating section 30 determines whether or not the frictional characteristic of the object to be measured is under calculation (Step S400). When the frictional characteristic of the object to be measured is under calculation (when YES in Step S400), the operating section 30 waits until the calculation of the frictional characteristic is completed (Step S400).

When the frictional characteristic of the object to be measured is not under calculation (No in Step S400), the operating section 30 determines whether or not significant time waveform data has been acquired from the sensor section 5 (Step S402).

When the significant time waveform data is acquired from the sensor section 5 (when YES in Step S402), the operating section 30 performs FFT processing on the acquired time waveform data, to derive an amplitude value at each frequency (Step S404). The operating section 30 then acquires reference data from the storage section 14 (Step S406).

Subsequently, the operating section 30 compares the derived amplitude value at each frequency with the acquired reference data (Step S408). The operating section 30 then detects the slipping state based upon the comparison result, and provides the display output section 16 with the detection result (Step S410). The operating section 30 then completes its processing.

When the significant amplitude value data has not been acquired from the sensor section 5 (when NO in Step S402), the operating section 30 completes its processing.

According to the aforesaid processing flow, the operating section 30 detects the slipping state.

It should be noted that the case where the object to be measured is a tire was described in Embodiment 2 above, it goes without saying that the same processing can be applied to the object to be measured other than the tire.

Moreover, while the configuration where the sensor section is integrated with the object to be measured for measurement was described in Embodiment 2 above, it is also possible to arrange the sensor section on the external surface of the object to be measured and calculate the frictional characteristic as in Embodiment 1.

According to Embodiment 2 of the present invention, the sensor section transmits the time waveform data of the reflected sound wave through the operational processing section and the wireless signal. Hence, the sensor section is arranged so as to be integrated with the object to be measured, thereby allowing the operational processing section to successively calculate a loss tangent of the object to be measured based upon the time waveform data of the reflected sound wave transmitted from the sensor section. This enables easy calculation of the frictional characteristic of the object to be measured in rotary motion, such as a tire.

Further, according to Embodiment 2 of the present invention, the sensor section receives the slipping sound wave, generated by friction between the object to be measured such as a tire and the road surface or the like, in addition to the reflected sound wave generated by reflection of the incident sound wave on the object to be measured. This allows the operational processing section to detect the slipping state of the object to be measured based upon the slipping sound wave. Accordingly, the sensor section of the object to be measured can be detected while the frictional characteristic of the object to be measured is acquired in the same configuration.

[Embodiment 3]

In Embodiments 1 and 2 above, the configurations (front face reflection method) were described where the loss tangent is measured based upon the reflected sound wave generated by reflection on the surface of the object to be measured. In Embodiment 3 described is a configuration (bottom face reflection method) where a loss tangent is measured based upon two reflected sound waves generated by reflection on the flat face and the bottom face of the object to be measured.

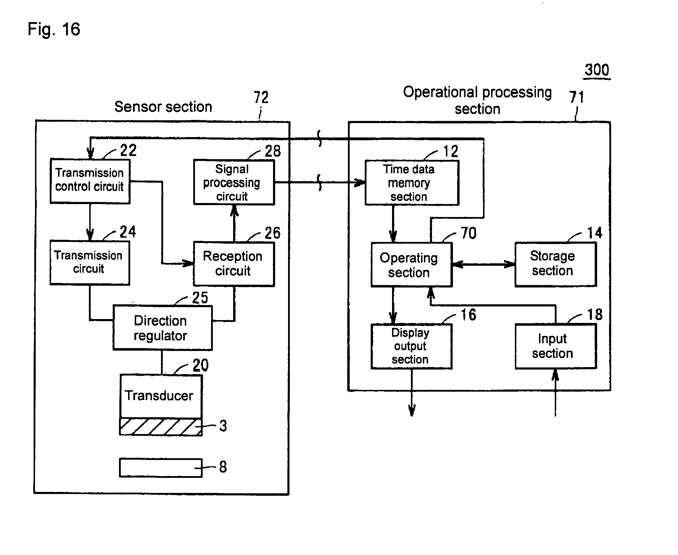

Fig. 16 shows a schematic constitutional view of a frictional characteristic measuring apparatus 300 according to Embodiment 3.

With reference to FIG. 16, the frictional characteristic measuring apparatus 300 is comprised of an operational processing section 71 and a sensor section 72.

The operational processing section 71 is configured by replacing the operating section 10 with an operating section 70 in the operational processing section 1 of the frictional characteristic measuring apparatus 100 according to Embodiment 1.

Upon reception of a measurement command from the outside through the input section 18, the operating section 70 accepts the thickness and the density of the object to be measured, and thereafter gives an emission command to the sensor section 72, to allow an incident sound wave to be emitted to the object to be measured. The operating section 70 then reads time waveform data of two reflected sound waves stored in the time data memory section 12 and measures delay time. Further, the operating section 70 performs FFT processing on each of the time waveforms to acquire an amplitude value and a phase at each frequency. Subsequently, the operating section 70 calculates a frictional characteristic of the object to be measured from the accepted values, the values stored in the storage section 14, the acquired delay time, and the acquired amplitude value as well as the phase at each frequency. Moreover, the operating section 70 outputs the calculated frictional characteristic of the object to be measured to the display output section 16.

Moreover, upon receipt of a reference acquirement command from the outside through the input section 18, the operating section 70 gives an emission command to the sensor section 2, to allow an incident sound wave to be emitted to the object to be measured. The operating section 70 then reads time wave form data of the reflected sound wave stored in the time data memory section 12, and performs FFT processing to acquire an amplitude value at each frequency for storage into the storage section 14 as a reference value.

Furthermore, upon receipt of a reflection member reference command from the outside through the input section 18, the operating section 70 accepts the thickness and the density of a reflection member 8, and thereafter gives an emission command to the sensor section 72 to allow an incident sound wave to be emitted to the reflection member. The operating section 70 then reads time waveform data of two reflected sound waves stored in the time data memory section 12 to measure delay time, and derives acoustic impedance of the reflection member 8. Further, the operating section 70 stores the derived acoustic impedance of the reflection member 8 into the storage section 14.

Since the remaining portion of the operating section 70 is the same as that of the operating section 10 in the frictional characteristic measuring apparatus 100 according to Embodiment 1, the specific description thereof is not repeated.

Meanwhile, the sensor section 72 is configured by addition of the reflection member 8 to the sensor section 2 of the frictional characteristic measuring apparatus 100 according to Embodiment 1.

The reflection member 8 has a shape in which the face thereof is in parallel with the face of the delay member 3. The distance between the reflection member 8 and the delay member 3 is changed by the user or some other shifting device. For the reflection member 8, a material is selected so as to have a large impedance difference from the delay member 3 or the object to be measured. Therefore, when the reflection member 8 is in intimate contact with the delay member 3 or the object to be measured, the incident sound wave emitted from the transducer 20 are efficiently reflected on the interface.

Since the remaining portion of the sensor section 72 is the same as that of the sensor section 2 of the frictional characteristic measuring apparatus 100 according to Embodiment 1, the specific description thereof is not repeated.

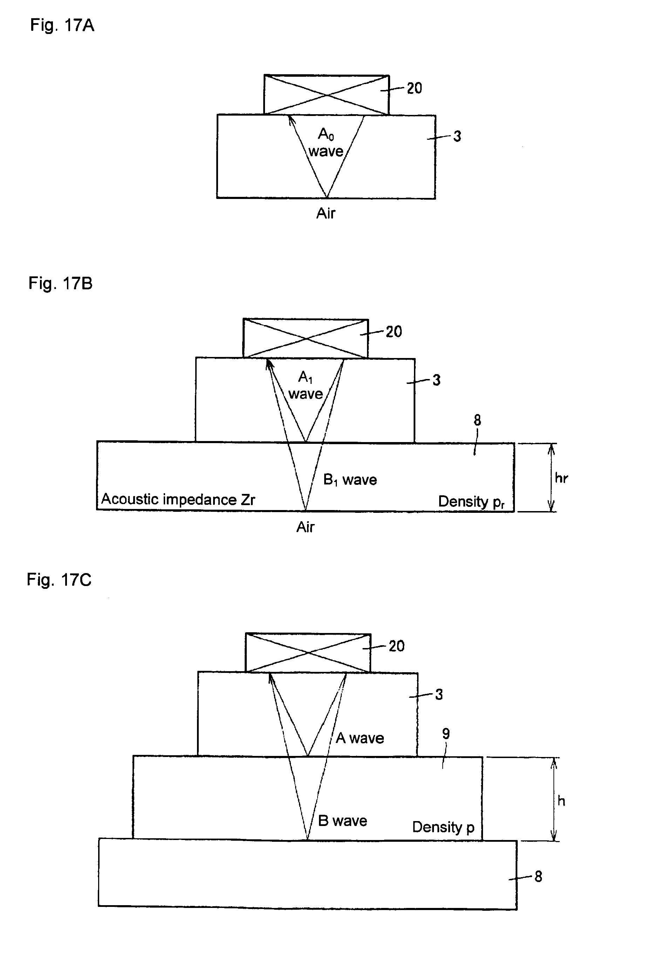

FIG. 17 shows a view for explaining a method for deriving a loss tangent according to the bottom face reflection method. FIG. 17A shows the case of acquiring a reference value.

FIG. 17B shows the case of acquiring a group velocity of the reflection member 8.
FIG. 17C shows the case of deriving a loss tangent of the object 9 to be measured.

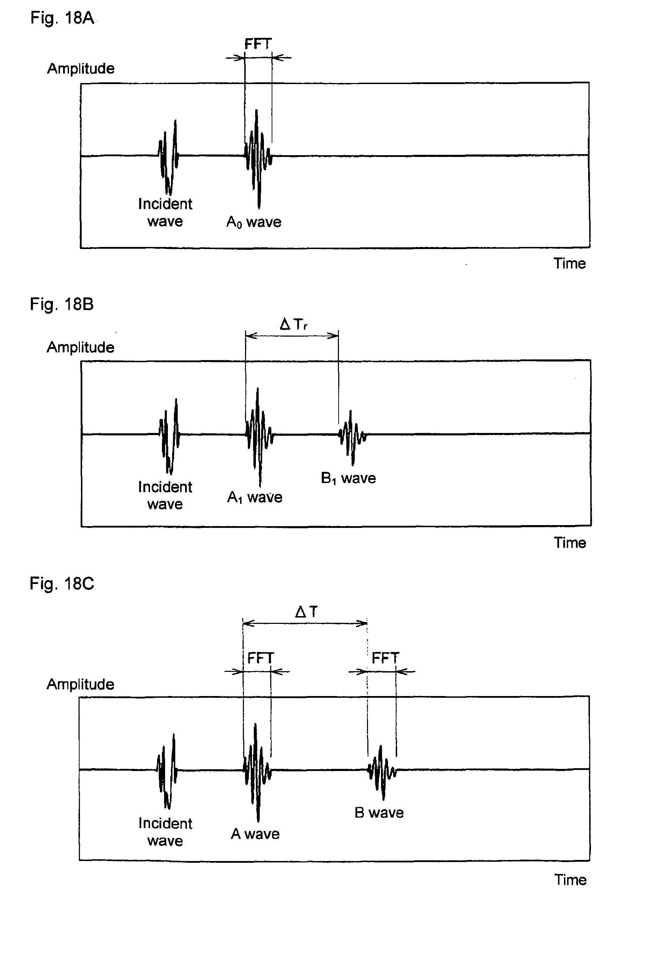

Further, FIG. 18 shows time waveforms in the respective cases of FIG. 17.

FIG. 18A shows a time waveform in FIG. 17A.
FIG. 18B shows a time waveform in FIG. 17B.
FIG. 18C shows a time waveform in FIG. 17C.

With reference to FIG. 17A, the operational processing section 71 first acquires an incident sound wave, emitted from the transducer 20 through the delay member 3, as a reference value in order to remove an initial error of the delay member 3. In a state where the delay member 3 is in intimate contact with neither the reflection member 8 nor the object 9 to be measured, the transducer 20 applies the incident sound wave. With reference to FIG. 18A, the transducer 20 receives a reflected sound wave ($A_0$ wave) generated on the interface between the delay member 3 and the air.

As in FIG. 4A, since the acoustic impedance in the air is sufficiently small as compared with the delay member 3 and the object 9 to be measured, the entire incident sound wave emitted from the transducer 20 is reflected on the interface between the delay member 3 and the air.

Here, the $A_0$ wave received by the transducer 20 is expressed by $A_0(f)\exp(i\theta_0(f))$, where i is an imaginary unit, $A_0(f)$ is an amplitude value (real value) at each frequency, and $\theta_0(f)$ is a phase ($0 \leq \theta_0(f) < \infty$) at each frequency. The operating section 70 performs FFT processing on the time waveform of the reflected sound wave received by the transducer 20 to acquire the amplitude value $A_0(f)$ and the phase $\theta_0(f)$ at each frequency.

With reference to FIG. 17B, when the transducer 20 emits the incident sound wave in a state where the delay member 3 and the reflection member 8 are in intimate contact with each other, a reflected sound wave ($A_1$ wave) is generated by reflection on the interface between the delay member 3 and the reflection member 8, and a reflected sound wave ($B_1$ wave) is generated by reflection on the interface between the reflection member 8 and the air. Namely, with reference to FIG. 18B, the transducer 20 receives the $A_1$ wave the $B_1$ wave at an interval of the delay time $\Delta T_r$. The operating section 70 then measures the delay time $\Delta T_r$ between the $A_1$ wave and the $A_2$ wave based upon the time waveform from the transducer 20.

Here, assuming the thickness $h_r$ of the reflection member 8 and the density $p_r$ of the reflection member 8 are known, the acoustic impedance $Z_r$ of the reflection member 8 is expressed by: $Z_r = p_r \times Vg_r$, where the group velocity of the reflection member 8 is $Vg_r$. Further, since the group velocity $Vg_r$ is expressed by: $Vg_r = 2h_r / \Delta T_r$, eventually, the

acoustic impedance $Z_r$ of the reflection member 8 is expressed by: $Z_r = 2h_r p_r / \Delta T_r$.

Accordingly, the operating section 70 previously accepts the thickness $h_r$ of the reflection member 8 and the density $p_r$ of the reflection member 8, and acquires the acoustic impedance $Z_r$ of the reflection member 8 from the accepted values and the measured delay time $\Delta T_r$.

In the aforesaid process, the operating section 70 acquires the reference value for deriving the loss tangent. With reference to FIG. 17C, in the case of deriving the loss tangent of the object 9 to be measured, the object 9 to be measured is arranged between the delay member 3 and the reflection member 8 so as to be in intimate contact with those members. When the transducer 20 emits an incident sound wave, a reflected sound wave (A wave) is generated by reflection on the interface between the delay member 3 and the object 9 to be measured, and a reflected sound wave (B wave) is generated by reflection on the interface between the object 9 to be measured and the reflection member 8. The operating section 70 detects time delay between the A wave and the B wave, to acquire the amplitude values and the phases of the A wave and the B wave at each frequency.

Namely, with reference to FIG. 18C, the transducer 20 receives the A wave and the B wave at an interval of $\Delta T$. The operating section 70 then measures the delay time $\Delta T$ between the A wave and the B wave based upon the time waveform from the transducer 20.

Here, assuming that the thickness h of the object 9 to be measured and the density p of the object 9 to be measured are known, the acoustic impedance Z of the object 9 to be measured is expressed by: $Z = p \times Vg$, where the group velocity on the object 9 to be measured is Vg. Further, since the group velocity Vg is expressed by: $Vg = 2h / \Delta T$, eventually, the acoustic impedance Z of the object 9 to be measured is expressed by: $Z = 2hp / \Delta T$.

The reflectance R of the incident sound wave on the interface between the object 9 to be measured and the reflection member 8 is expressed by: $R = (Z - Z_r)/(Z + Z_r) = (2hp/\Delta T - Z_r) / (2hp/\Delta T + Z_r)$.

Accordingly, the operating section 70 previously accepts the thickness h of the object 9 to be measured and the density p of the object 9 to be measured, and derives the reflectance R of the incident sound wave on the interface between the object 9 to be measured and the reflection member 8 from the accepted values, the measured delay time $\Delta T$, and the previously acquired acoustic impedance $Z_r$ of the reflection member 8.

Further, the A wave received by the transducer 20 is expressed by: $A(f)\exp(i\theta_A(f))$, and the B wave received by the transducer 20 is expressed by: $B(f)\exp(i\theta_B(f))$, where i is an imaginary unit, A(f), B(f) are amplitude values (real values) of the A wave and the B wave at each frequency, and $\theta_A(f)$, $\theta_B(f)$ are phases ($0 \le \theta_A(f) < \infty$, $0 \le \theta_B(f) < \infty$) of the A wave and the B wave at each frequency.

Subsequently, the operating section 70 performs FFT processing on the time waveform of the A wave received by the transducer 20, to acquire the amplitude value A(f) and the phase $\theta_A(f)$ of the A wave at each frequency. The operating section 70 also performs FFT processing on the time waveform of the B wave received by the transducer 20, to acquire the amplitude value B(f) and the phase $\theta_B(f)$ of the B wave at each frequency.

Further, using the $A_0$ wave, the amplitude values of the A wave and the B wave at each frequency, and the acquired reflectance R, an attenuation coefficient $\alpha(f)$ of the incident sound wave is expressed by an expression (10).

$$\alpha(f) = (1/2h)\ln(R(A_0(f)^2 - A(f)^2) / A_0(f)B(f)) \ ... \ (10)$$

Further, using the amplitude values and the phases of the A wave and the B wave at each frequency, a phase viscosity Vp(f) of the incident sound wave is expressed by an expression (11):

$$V_p(f) = 2h \times 2\pi f / (\theta_B - \theta_A + 2\pi f \Delta T + 2N\pi) \ ... \ (11)$$

Here, N is an arbitrary positive number.

Further, using the attenuation coefficient $\alpha(f)$ and the phase viscosity $V_p(f)$ derived by the expressions (10) and (11), the loss tangent tan $\delta(f)$ is expressed by an expression (12):

$$\tan \delta(f) = \alpha(f) \times V_p(f) / \pi f \ ... \ (12)$$

Therefore, the operating section 70 performs calculations of the expressions (10) to (12) to derive the loss tangent tan $\delta(f)$. Further, using the conversion constants A and B, the operating section 70 calculates the frictional coefficient from the derived loss tangent tan $\delta$(f).

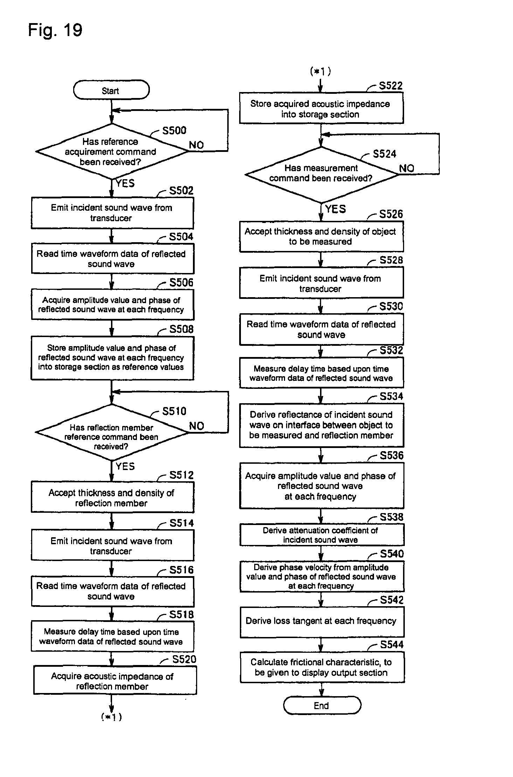

FIG. 19 shows a flowchart for measuring the frictional characteristic according to the bottom face reflection method.

With reference to Fig. 16 and FIG. 19, the operating section 70 determines whether or not to have received a reference acquirement command through the input section 18 (Step S500). When having received no reference acquirement command (when NO in Step S500), the operating section 70 waits until receiving the reference acquirement command (Step S500).

Meanwhile, the user arranges the delay member 3 so as to be in intimate contact with neither the object 9 to be measured nor the reflection member 8, and then gives the reference acquirement command.

When having received the reference acquirement command (when YES in Step S500), the operating section 70 gives an emission command to the transmission control circuit 22 and allows the incident sound wave to be emitted from the transducer 20 (Step S502).

Subsequently, the operating section 70 reads time waveform data of a reflected sound wave ($A_0$ wave) received by the transducer 20 from the time data memory section 12 (Step S504). The operating section 70 then performs FFT processing with respect to the time waveform data of the read reflected sound wave ($A_0$ wave), to acquire an amplitude value of the reflected sound wave ($A_0$ wave) at each frequency (Step S506). Further, the operating section 70 stores the amplitude value of the reflected sound wave ($A_0$ wave) at each frequency into the storage section 14 as a reference value (Step S508).

Next, the operating section 70 determines whether or not to have received a reflection member reference command through the input section 18 (Step S51 0). When having received no reflection member reference command (when NO in Step S510), the operating section 70 waits until receiving the reflection member reference command (Step S510). When having received the reflection member reference command (when YES in Step S510), the operating section 70 accepts the thickness and the density of the reflection member 8 through the input section 18 (Step S512).

Meanwhile, the user arranges the delay member 3 so as to be in intimate contact with the reflection member 8. Thereafter, the user gives a reflection member reference command, and then gives the thickness and the density of the reflection member 8.

The operating section 70 gives an emission command to the transmission control circuit 22, and allows the incident sound wave to be emitted from the transducer 20 (Step S514). Subsequently, the operating section 70 reads time wave form data of the reflected sound waves ($A_1$ wave and $B_1$ wave) received by the transducer 20 from the time data memory section 12 (Step S516). The operating section 70 then measures delay time based upon the read time waveform data of the read reflected sound waves ($A_1$ wave and $B_1$ wave)(Step S518). Further, the operating section 70 acquires acoustic impedance of the reflection member 8 from the accepted thickness and density of the reflection member 8 and the measured delay time (Step S520). Moreover, the operating section 70 stores the acquired acoustic impedance into the storage section 14 (Step S522).

Further, the operating section 70 determines whether or not to have received a measurement command (Step S524). When having received no measurement command (when NO in Step S524), the operating section 70 waits until receiving the measurement command (Step S524). When having received the measurement command (when YES in Step S524), the operating section 70 accepts the thickness and the density of the object 9 to be measured through the input section 18 (Step S526).

Meanwhile, the user arranges the object 9 to be measured between the delay member 3 and the reflection member 8 so as to be in intimate contact with the delay member 3 and the reflection member 8. Thereafter, the user gives the measurement command, and then gives the thickness and the density of the object 9 to be measured.

The operating section 70 gives an emission command to the transmission control circuit 22, and allows the incident sound wave to be emitted from the transducer 20 (Step S528). Subsequently, the operating section 70 reads time waveform data the reflected sound waves (A wave and B wave) received by the transducer 20 from the time data memory section 12 (Step S530). The operating section 70 then measures delay time based upon the read time waveform data of the sound waves (A wave and B wave) (Step S532). Further, the operating section 70 derives the reflectance of the incident sound wave on the interface between the object 9 to be measured and the reflection member 8 from the accepted thickness and density of the object 9 to be measured, the acoustic impedance of the reflection member 8 read from the storage section 14, and the measured delay time (Step S534).

Further, the operating section 70 performs FFT processing with respect to the time waveform data of the respective reflected sound waves (A wave and B wave), to acquire the amplitude values and the phases of the respective reflected sound waves (A wave and B wave) at each frequency (Step S536). The operating section 70 then derives the attenuation coefficient of the incident sound wave from the amplitude value at each frequency as the reference value read from the storage section 14, the derived reflectance of the incident sound wave on the interface between the object 9 to be measured and the reflection member 8, and the amplitude values of the respective reflected sound waves (A wave and B wave) at each frequency (Step S538). Further, the operating section 70 derives a phase viscosity from the amplitude values and the phase of the respective reflected sound waves (A wave and B wave) at each frequency (Step S540).

The operating section 70 derives the loss tangent at each frequency from the derived attenuation coefficient and shifting velocity (Step S542). Further, the operating section 70 calculates the frictional characteristic from the derived loss tangent at each frequency, and gives the frictional characteristic to the display output section 16 (Step S544). Thereby, the user can be notified of the calculated frictional characteristic through the display output section 16.

The operating section 70 then completes its processing.

In addition, the frictional characteristic measuring apparatus 300 according to Embodiment 3 is capable of performing the deterioration state determination, the quality determination, and the conversion constant calibration, as is the frictional characteristic measuring apparatus 100 according to Embodiment 1. Since each function is the same as in Embodiment 1, the specific description thereof is not repeated.

(Modified Example)

The aforesaid bottom face reflection method can also be applied to the frictional characteristic measuring apparatus 200 according to Embodiment 2.

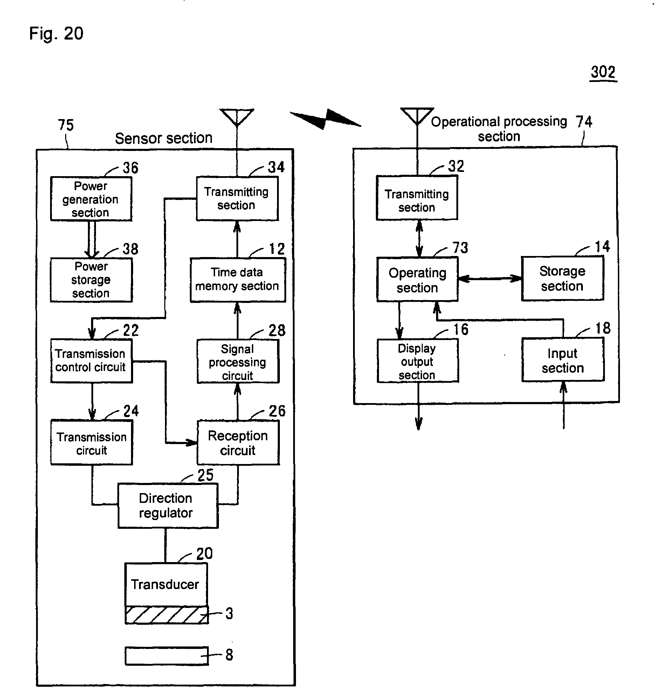

FIG. 20 shows a schematic constitutional view of a frictional characteristic measuring apparatus 302 according to a modified example of Embodiment 3.

With reference to FIG. 20, the frictional characteristic measuring apparatus 302 according to the modified example of Embodiment 3 is comprised of an operational processing section 74 and a sensor section 75.

The operational processing section 74 is configured by replacing the operating section 30 with an operating section 73 in the operational processing section 4 of the frictional characteristic measuring apparatus 200 according to Embodiment 2.

upon receipt of a measurement command, a reference acquirement command or a reflection member reference command, the operating section 73 gives an emission command to the transmitting section 32, and also receives time waveform data of the reflected sound wave through the transmitting section 32. Since the remaining portion of the operating section 73 is the same as that of the operating section 70 in Embodiment 3, the specific description thereof is not repeated.

The sensor section 75 is configured by adding the reflection member 8 to the sensor section 5 of the frictional characteristic measuring apparatus 200 according to Embodiment 2.

Since the reflection member 8 is the same as described above, the specific description thereof is not repeated. As thus described, the bottom face reflection method can be applied even to the configuration where the operational processing section and the sensor section are connected with each other with a wireless signal.

Further, as is the frictional characteristic measuring apparatus 200 according to Embodiment 2, the frictional characteristic measuring apparatus 302 according to the modified example of Embodiment 3 is capable of being incorporated into the object to be measured such as a tire, and also to detect the slipping state. Since functions of such incorporation and detection are the same as those in Embodiment 2, the specific descriptions thereof are not repeated.

According to Embodiment 3 of the present invention, in addition to the effects in Embodiments 1 and 2, the sensor section receives a reflected sound wave generated by traveling of the incident sound wave to and back from over a medium of the object to be measured. Since this enables the operational processing section to calculate a frictional characteristic with respect to the entire medium of the object to be measured, it is possible to calculate the frictional characteristic of the entire object to be measured, as well as the frictional characteristic on the surface of the object to be measured.

[Embodiment 4]

In Embodiments 1 and 3 above, the configurations (front face reflection method, bottom face reflection method) were described where the incident sound wave is applied while the reflected sound wave is received from the object to be measured, using one transducer. In Embodiment 4 described is a configuration (transmitting method) by two transducers respectively for applying the incident sound wave and receiving a transmitted sound wave.

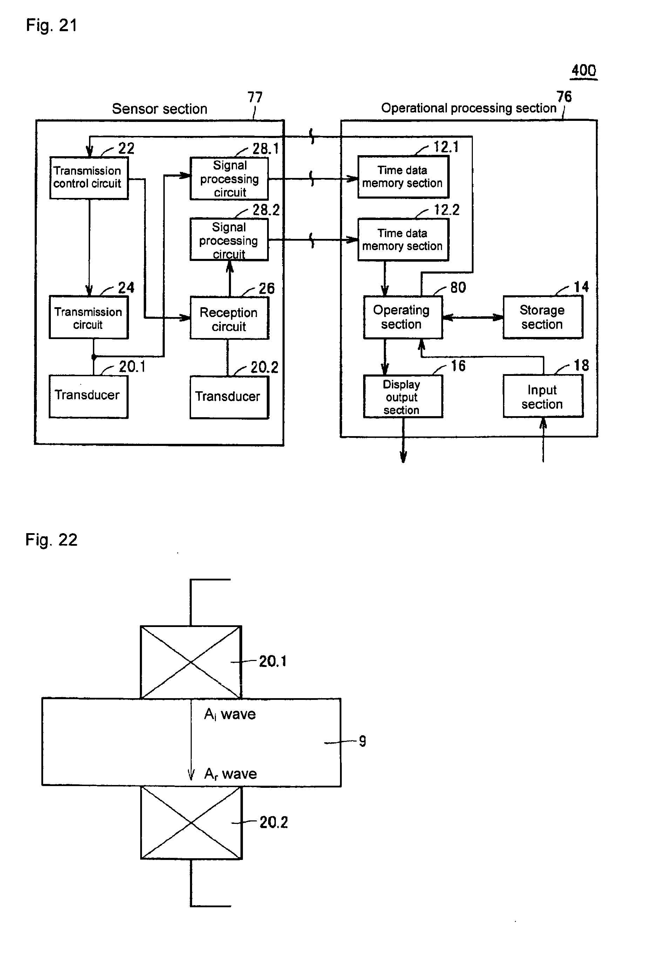

FIG. 21 shows a schematic constitutional view of a frictional characteristic measuring apparatus 400 according to Embodiment 4.

With reference to FIG. 21, the frictional characteristic measuring apparatus 400 is comprised of an operational processing section 76 and a sensor section 77.

The operational processing section 46 is comprised of time data memory sections 12.1, 12.2, an operating section 80, the storage section 14, the display output section 16, and the input section 18.

The time data memory section 12.1 stores a time wave form of an incident sound wave emitted from the sensor section 77 at a prescribed cycle.

The time data memory section 12.2 stores a time wave form of a transmitted sound wave received by the sensor section 77 at a prescribed cycle.

Since the remaining portion of each of the time data memory sections 12.1, 12.2 is the same as that of the time data memory section 12, specific explanation thereof is not repeated.

Upon receipt of a measurement command from the outside through the input section 18, the operating section 80 gives an emission command to the sensor section 77, to allow an incident sound wave to be emitted to the object to be measured. The operating section 80 then reads time wave form data of the incident sound wave stored in the time data memory section 12.1, and also reads time wave form data of the transmitted sound wave stored in the time data memory section 12.2. Further, the operating section 80 performs FFT processing on each of the read time waveform data to acquire an amplitude value and a phase at each frequency. Subsequently, the operating section 80 compares the amplitude values and the phases of the incident sound wave and the transmitted sound wave at each frequency, to calculate the frictional characteristic of the object to be measured. Moreover, the operating section 80 outputs the calculated frictional characteristic of the object to be measured to the display output section 16.

Since the remaining portion of the operating section 80 is the same as that of the operating section 10 of the frictional characteristic measuring apparatus 100 according to Embodiment 1, the specific description thereof is not repeated.

Since the storage section 14, the display output section 16 and the input section 18 are the same as in Embodiment 1, the specific descriptions thereof are not repeated.

Meanwhile, the sensor section 77 is comprised of transducers 20.1, 20.2, signal processing circuits 28.1, 28.2, the transmission control circuit 22, the transmission circuit 24 and the reception circuit 26.

The transducer 20.1 is connected with the transmission circuit 24. The transducer 20.1 converts an electrical signal received from the transmission circuit 24 into a sound wave, and emits the sound wave to the object to be measured.

The transducer 20.2 is connected with the reception circuit 26. The transducer 20.2 converts the sound wave after propagating through the object to be measured into an electrical signal, and outputs the electrical signal to the reception circuit 26.

Since the remaining portion of each of the transducers 20.1, 20.2 is the same as that of the transducer 20 of the frictional characteristic measuring apparatus 100 according to Embodiment 1, the specific description thereof is not repeated.

The signal processing circuit 28.1 is connected with the transmission circuit 24. The signal processing circuit 28.1 receives the electrical signal given from the transmission circuit 24 to the transducer 20.1, and sequentially outputs a momentary amplitude value of the sound wave emitted from the transducer 20.1.

The signal processing circuit 28.2 receives the electrical signal from the reception circuit 26, and sequentially outputs a momentary amplitude value of the sound wave received by the transducer 20.2.

Since the remaining portion of each of the signal processing circuits 28.1, 28.2 is the same as that of the signal processing circuit 28 of the frictional characteristic measuring apparatus 100 according to Embodiment 1, the specific description thereof is not repeated.

Since the transmission control circuit 22, the transmission circuit 24 and the reception circuit 26 are the same as in Embodiment 1, the specific descriptions thereof are not repeated.

FIG. 22 shows a view for explaining a method for deriving a loss tangent according to a transmission method. With respect to FIG. 22, an incident sound wave ($A_i$ wave) emitted from the transducer 20.1 propagates to the object 9 to be measured, and the transmitted sound wave (At wave) is incident on the transducer 20.2. Here, the amplitude value and the phase of the transmitted sound wave change according to the characteristic of the object 9 to be measured. The operating section 80 performs FFT processing on time waveforms of the incident sound wave and the transmitted sound wave, and compares the amplitude values and the phases of those waves at each frequency to derive a loss tangent.

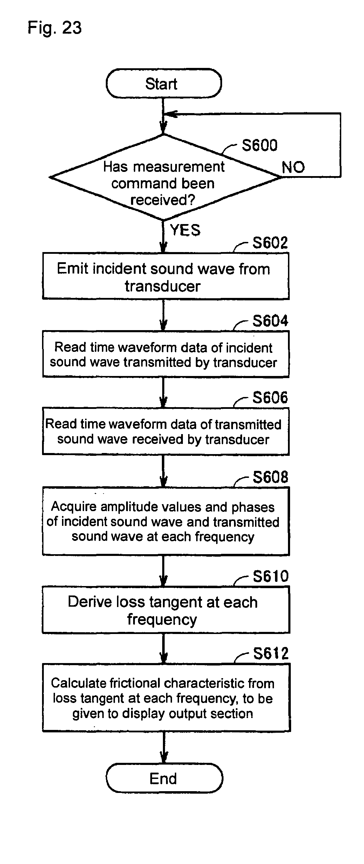

FIG. 23 shows a flowchart for measuring a frictional characteristic according to the transmission method. With reference to FIG. 21 and FIG. 23, the operating section 80 determines whether or not to have received a measurement command (Step S600). When having received no measurement command (when NO in Step S600), the operating section 80 waits until receiving the measurement command (Step S600). When having received the measurement command (when YES in Step S600), the operating section 80 gives an emission command to the transmission control circuit 22, and allows a sound wave to be emitted from the transducer 20.1 (Step S602).

The operating section 80 reads from the storage section 14 previously measured time waveform data of an incident sound wave ($A_i$ wave) transmitted by the transducer 20.1 (Step S604). Simultaneously, the operating section 80 reads from the time data memory section 12.2 time waveform data of a transmitted sound wave (At wave) received by the transducer 20.2 (Step S606).

The operating section 80 performs FFT processing with respect to time waveforms of the read incident sound wave ($A_i$ wave) and transmitted sound wave (At wave), to acquire respective amplitude values and phases of the incident sound wave and the transmitted sound wave at each frequency (Step S608). Subsequently, the operating section 80 compares the acquired amplitude values and phases of the incident sound wave with those of the transmitted sound wave, to derive a loss tangent at each frequency (Step S610). The operating section 80 calculates a frictional characteristic from the derived loss tangent at each frequency, and gives the frictional characteristic to the display output section 16 (Step S612). Thereby, the user can be notified of the calculated frictional characteristic through the display output section 16. The operating section 80 then completes its processing.

The frictional characteristic measuring apparatus 400 according to Embodiment 4 is capable of performing the deterioration state determination, the quality determination and the conversion constant calibration, as is the frictional characteristic measuring apparatus 100 according to Embodiment 1. Since each function is the same as in Embodiment 1, the specific description thereof is not repeated.

(Modified Example)

The aforesaid transmission method can also be applied to the frictional characteristic measuring apparatus 200 according to Embodiment 2.

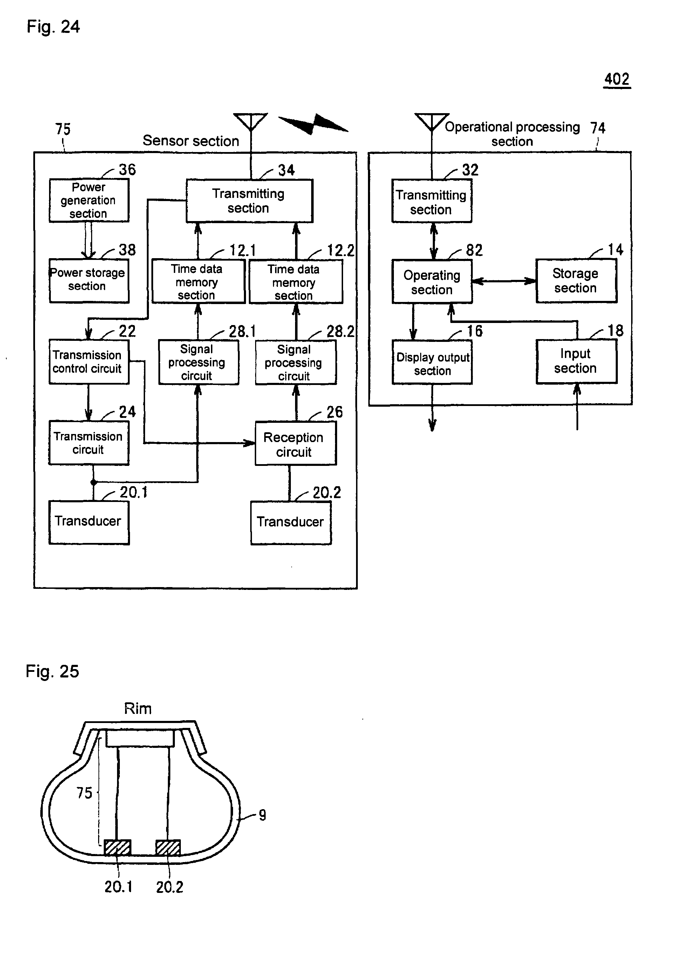

FIG. 24 shows a schematic constitutional view of a frictional characteristic measuring apparatus 402 according to a modified example of Embodiment 4.

With reference to FIG. 24, the frictional characteristic measuring apparatus 402 according to the modified example of Embodiment 4 is comprised of an operational processing section 78 and a sensor section 79.

The operational processing section 78 is configured by replacing the operating section 30 with an operating section 82 in the operational processing section 4 of the frictional characteristic measuring apparatus 200 according to Embodiment 2.

upon receipt of a measurement command, the operating section 82 gives an emission command to the transmitting section 32, and also receives time waveform data of the incident sound wave and the transmitted sound wave through the transmitting section 32. Since the remaining portion of the operating section 82 is the same as that of the operating section 80 in Embodiment 4, the specific description thereof is not repeated.

Meanwhile, the sensor section 79 is comprised of the transmitting section 34, the transducers 20.1, 20.2, the time data memory sections 12.1, 12.2, the signal processing circuits 28.1, 28.2, the power storage section 38, the power generation section 36, the transmission control circuit 22, the transmission circuit 24 and the reception circuit 26.

The transmitting section 34 reads respective time data stored in the time data memory sections 12.1, 12.2, and transmits the time data to the operational processing section 78.

Since the transducer 20.1, 20.2, the time data memory sections 12.1, 12.2, and the signal processing circuits 20.1, 20.2 are the same as described above, the specific descriptions thereof are not repeated.

Since the power storage section 38, the power generation section 36, the transmission control circuit 22, the transmission circuit 24, and the reception circuit 26 are the same as in Embodiment 2, the specific descriptions thereof are not repeated.

As thus described, the transmission method can also be applied to the configuration where the operational processing section and the sensor section are connected with each other through the wireless signal.

Further, as is the frictional characteristic measuring apparatus 200 according to Embodiment 2, the frictional characteristic measuring apparatus 402 according to the modified example of Embodiment 4 is capable of being incorporated into the object to be measured such as a tire, and also to detect the slipping state.

FIG. 25 shows a view of an arrangement example of the sensor section 79.

With reference to FIG. 25, the sensor section 79 of the frictional characteristic measuring apparatus 402 has two transducers 20.1, 20.2. Therefore, as in FIG. 11, the transducers 20.1, 20.2 are arranged so as to be opposed to each other at a prescribed interval through the object to be measured.

Since the remaining portion is the same as in Embodiment 2, the specific description thereof is not repeated. According to Embodiment 4 of the present invention, in addition to the effects in Embodiments 1 and 2, the sensor section includes the transducer which emits an incident sound wave and the transducer which receives a transmitted sound wave, thereby enabling omission of a configuration for separating the sound waves, as compared with the case of emitting and receiving the sound waves with the use of the same transducer. Further, only calculation of a change in transmitted sound wave with respect to the incident sound wave is required, thereby allowing simplification of transducer.

[Embodiment 5]

In Embodiments 1 to 4 above, the configurations were described where the loss tangent of the object to be measured is derived by means of the sound wave. In Embodiment 5 described is a configuration (impedance method) where a loss tangent is derived by directly giving vibration to the object to be measured.

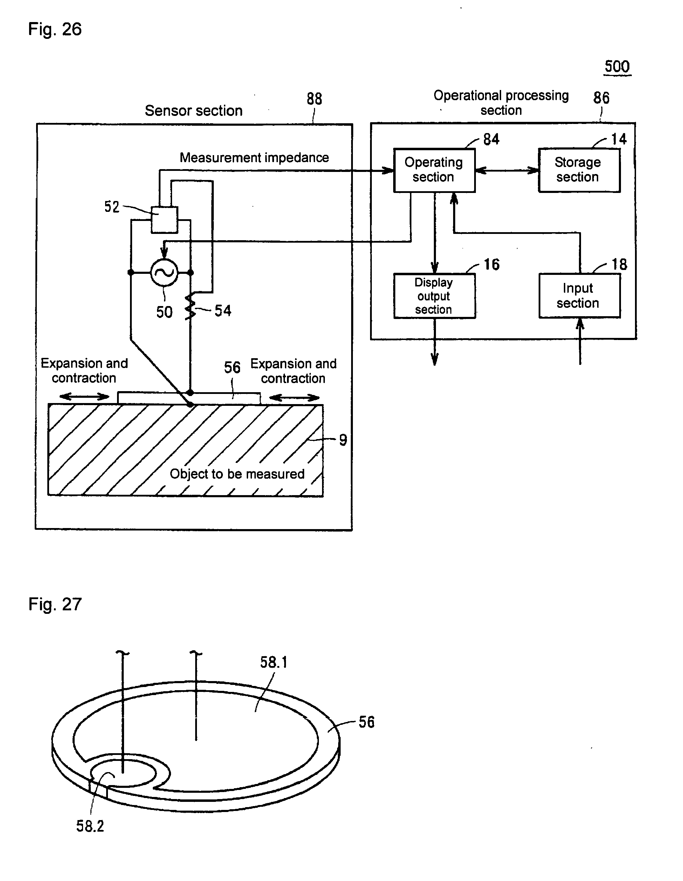

FIG. 26 shows a schematic constitutional view of a frictional characteristic measuring apparatus 500 according to Embodiment 5.

With reference to FIG. 26, the frictional characteristic measuring apparatus 500 is comprised of an operational processing section 86 and a sensor section 88.

The operational processing section 86 is comprised of an operating section 84, the storage section 14, the display output section 16, and the input section 18.

Upon receipt of a measurement command from the outside through the input section 18, the operating section 84 gives an applying frequency command, to give vibration to the object to be measured. The operating section 84 then receives measured impedance from the sensor section 88 and derives a loss tangent from the phase of the impedance. Since the remaining portion of the operating section 84 is the same as that of the operating section 10 of the frictional characteristic measuring apparatus 100 according to Embodiment 1, the specific description thereof is not repeated.

Further, since the storage section 14, the display output section 16 and the input section 18 are the same as those in Embodiment 1, the specific descriptions thereof are not repeated.

Meanwhile, the sensor section 88 is comprised of a distorted member 56, a voltage generator 50, an impedance measuring instrument 52, and a current detector 54.

The distorted member 56 is arranged so as to be in intimate contact with the object 9 to be measured, and is distorted by expanding or contracting within the interface between the distorted member 56 and the object 9 to be measured according to a voltage and an alternating current (AC) frequency applied from the voltage generator 50. By way of example, the distorted member 56 is made of barium titanate, lead zirconate titanate (PZT), or the like.

The voltage generator 50 generates an AC voltage having a prescribed frequency according to the applying frequency command from the operational processing section 86, and gives the AC voltage to the distorted member 56.

The current detector 54 is arranged on a conducting wire connecting the voltage generator 50 and the distorted member 56. The current detector 54 detects a current given from the voltage generator 50 to the distorted member 56, and outputs the current to the impedance measuring instrument 52.

The impedance measuring instrument 52 is connected to an electrode 58.1 and an electrode 58.2, to detect generated voltages thereof, and also receives a detected current value outputted from the current detector 54 to measure impedance generated in the distorted member 56. The impedance measuring instrument 52 then outputs the measured impedance to the operational processing section 86.

FIG. 27 shows a specific view of the distorted member 56.

With reference to FIG. 27, the electrodes 58.1, 58.2 are in intimate contact with each face side of the distorted member 56, and according to a voltage applied from the voltage generator 50 (not shown), an electric field is generated between the electrode 58.1 and the electrode 58.2. Such generation of the electric filed inside the distorted member 56 leads to distortion of the member.

Again with reference to FIG. 26, while being distorted so as to be in proportion to the voltage applied by the voltage generator 50, the distorted member 56 is arranged so as to be in intimate contact with the object 9 to be measured, and hence driving resistance of the distorted member 56 is determined according to a viscoelastic characteristic of the object 9 to be measured. Namely, while the distorted member 56 generates stress according to the voltage applied by the voltage generator 50 and is then distorted according to the stress, since the distorted member 56 is in intimate contact with the object 9 to be measured, the viscoelastic characteristic of the object 9 to be measured has a large influence, causing a phase delay of distortion generated by cyclic stress. Further, since this driving resistance serves as a main factor for a change in impedance of a closed circuit including the distorted member 56, measuring the impedance can lead to detection of the viscoelastic characteristic of the object 9 to be measured.

Accordingly, the voltage applied to the distorted member 56 corresponds to the stress generated in the distorted member 56, and the impedance of the closed circuit including the distorted member 56 corresponds to the viscoelastic characteristic of the object 9 when being the distorted member 56.

The operating section 84 changes the applying frequency command within the range of required loss tangent frequencies, to acquire measured impedance at each frequency. The operating section 84 then derives the loss tangent of the object 9 to be measured from a power factor angle at each frequency, to further calculate the frictional characteristic of the object 9 to be measured.

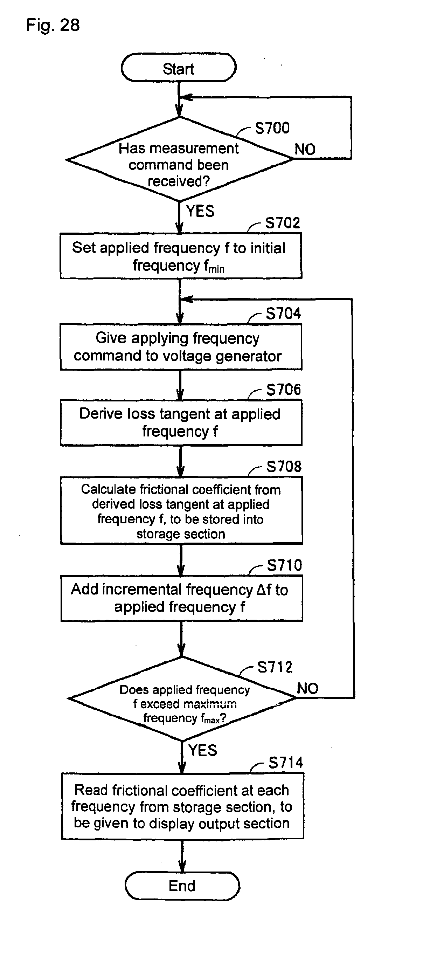

FIG. 28 shows a flowchart for measuring the frictional characteristic according to the impedance method.

With reference to FIG. 26 and FIG. 28, the operating section 84 determines whether or not to have received a measurement command (Step S700). When having received no measurement command (when NO in Step S700), the operating section 84 waits until receiving the measurement command (Step S700).

When having received the measurement command (when YES in Step S700), the operating section 84 sets an applied frequency f to an initial frequency $f_{min}$ (Step S702). The operating section 84 then gives an applying frequency command to the voltage generator 50 (Step S704).

Subsequently, the operating section 84 derives a loss tangent at the applied frequency f from the measured impedance received from the impedance measuring instrument 52 (Step S706). The operating section 84 then calculates the frictional characteristic from the loss tangent at the derived applied frequency f, and stores the frictional characteristic into the storage section 14 (Step S708).

The operating section 84 adds an incremental frequency Δf to the applied frequency f (Step S71 0). The operating section 84 then determines whether or not the applied frequency f after the above addition exceeds a maximum frequency $f_{max}$ (Step S712).

When the applied frequency f does not exceed the maximum frequency $f_{max}$ (when NO in Step S712), the operating section 84 again gives an applying frequency command to the voltage generator 50 (Step S704). Thereafter, the operating section 84 repeats Steps S706, S708, S710, and S712 until NO turns to YES in Step S712.

When the applied frequency f exceeds the maximum frequency $f_{max}$ (when YES in Step S712), the operating section 84 reads the frictional coefficient at each frequency from the storage section 14, and gives the frictional coefficient to the display output section 16 (Step S714). The operating section 84 then completes its processing.

Further, the frictional characteristic measuring apparatus 500 according to Embodiment 5 is capable of performing the deterioration state determination, the quality determination and the conversion constant calibration, as is the frictional characteristic measuring apparatus 100 according to Embodiment 1. Since each function is the same as in Embodiment 1, the specific description thereof is not repeated.

(Modified Example)

As thus described, since the distorted member 56 generates stress according to the electric field generated inside thereof, formation of a configuration where an electric field is given to the distorted member 56 can eliminate the need for brining an electrode into intimate contact with the surface of the distorted member 56.

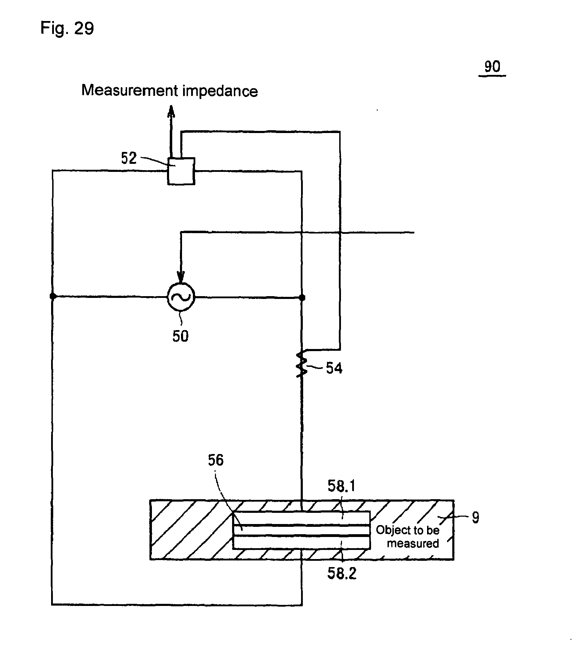

FIG. 29 shows a schematic constitutional view of a sensor section 90 according to a modified example of Embodiment 5.

With reference to FIG. 29, the sensor section 90 is configured such that in the sensor section 88 shown in FIG. 26, the distorted member 56 is embedded into the object to be measured, and an internal electric field is generate by the electrodes 58. 1, 58.2 with respect to the object 9 to be measured and the distorted member 56.

Since the behavior of the impedance in the distorted member 56 is the same as that of the sensor section 88 in FIG. 26, the specific description thereof is not repeated.

In the sensor section 90, each face of the distorted member 56 is in intimate contact with the object 9 to be measured, and hence the degree of contact is large as compared with that in the sensor section 88 shown in FIG. 26. It is therefore possible for the sensor section 90 to calculate the loss tangent of the object 9 to be measured with higher accuracy. Further, by previously embedding the distorted member 56 into a product potential as the object 9 to be measured, it is possible to calculate the frictional characteristic of the object 9 to be measured after actual use of the product as the object 9 to be measured.

According to Embodiment 5 of the present invention, in addition to the effects in Embodiments 1 and 2, the loss tangent can be derived based upon the change in impedance associated with displacement of an electrostriction component corresponding to the viscoelastic characteristic of the object to be measured. This can make the configuration simpler than in the case of using a sound wave or the like.

[Embodiment 6]

In Embodiment 2 above, the active configuration was described where the time waveform data measured by the sensor section is transmitted by means of the wireless signal. In Embodiment 6 described is a passive configuration where, upon receipt of a wireless signal from the outside, a sensor section makes the wireless signal include information according to the object to be measured, and then transmits the signal back.

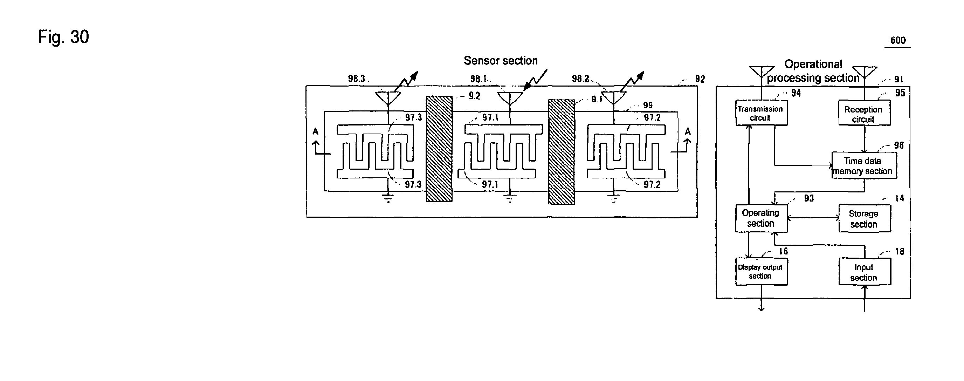

FIG. 30 shows a schematic constitutional view of a frictional characteristic measuring apparatus 600 according to Embodiment 600.

With reference to FIG. 30, the frictional characteristic measuring apparatus 600 is comprised of an operational processing section 91 and a sensor section 92.

The operational processing section 91 is comprised of an operating section 93, a transmission circuit 94, a reception circuit 95, a time data memory section 96, the storage section 14, the display output section 16 and the input section 18.

Upon receipt of a measurement command from the outside through the input section 18, the operating section 93 accepts the length of the object to be measured, and thereafter gives an emission command to the transmission circuit 94 to allow an incident electric wave to be emitted to the sensor section 92.

The operating section 93 reads time waveform data of a reflected electric wave stored in the time data memory section 96 to measure propagation time thereof, and also performs FFT processing on the read time waveform to acquire an amplitude value and a phase at each frequency. Subsequently, the operating section 93 calculates the frictional characteristic of the object to be measured from the accepted value, the reference value stored in the storage section 14, the measured propagation time and the acquired amplitude value and phase. Further, the operating section 93 outputs the calculated frictional characteristic of the object to be measured to the display output section 16.

Further, upon receipt of a reference value acquirement command from the outside through the input section 18, the operating section 93 gives an emission command to the transmission circuit 94 to allow an incident electric wave to be emitted to the sensor section 92. The operating section 93 reads time wave form data of the reflected electric waves stored in the time data memory section 96 to measure propagation time thereof, and also performs FFT processing on the read time waveform to acquire an amplitude value and a phase at each frequency. Subsequently, the operating section 93 stores into the storage section 14 the measured propagation time and the acquired amplitude value and phase at each frequency as reference values.

Since the remaining portion of the operating section 93 is the same as that of the operating section 10 of the frictional characteristic measuring apparatus 100 according to Embodiment 1, the specific description thereof is not repeated.

Upon receipt of an emission command from the operating section 93, the transmission circuit 94 emits an incident electric wave for driving the sensor section 92. Further, the transmission circuit 94 gives the time data memory section 96 a trigger signal for notifying the timing of emission of the incident electric wave.

The reception circuit 95 receives a reflected electric wave generated upon receipt of the incident electric wave by the sensor section 92, to extract only a prescribed frequency component, to sequentially outputs a momentary amplitude value to the time data memory section 96.

Upon receipt of a trigger signal from the transmission circuit 94, the time data memory section 96 starts storage of data outputted from the reception circuit 95.

Since the storage section 14, the display output section 16 and the input section 18 are the same as in Embodiment 1, the specific descriptions thereof are not repeated.

Meanwhile, upon receipt of an incident electric wave from the operational processing section 91, the sensor section 92 generates a surface acoustic wave (SAW; hereinafter referred to as SAW) that propagates through the surface of the sensor section 92. Subsequently, the sensor section 92 generates a reflected electric wave from the SAW having propagated through the surface thereof, and emits the reflected electric wave to the operational processing section 91. The sensor section 92 is comprised of comb-shaped electrodes (inter digital transducer (IDT); hereinafter referred to as IDT) 97.1, 97.2, 97.3, antennas 98.1, 98.2, 98.3, and a substrate section 99.

One end of the IDT 97.1 is connected with the antenna 98.1, and the other end thereof is connected with an earth potential. According to a voltage induced in the antenna 98.1, the electrode face constituting the comb shape vibrates to generate an SAW.

One end of the IDT 97.2 is connected with the antenna 98.2, and the other end thereof is connected with a reference potential. According to the SAW received from the IDT 97.1, the electrode face constituting the comb shape vibrates to induce a voltage. The IDT 97.2 then excites the antenna 98.2 with the induced voltage. Similarly, one end of the IDT 97.3 is connected with the antenna 98.3, and the other end thereof is connected with a reference potential. According to the SAW received from the IDT 97.1, the electrode face constituting the comb shape vibrates to induce a voltage. The IDT 97.3 then excites the antenna 98.3 with the induced voltage.

The IDTs 97.1, 97.2, 97.3 are formed on the surface of the substrate section 99, and the substrate section 99 serves as a channel through which the SAW generated at the IDT 97.1 propagates. Further, the substrate section 99 is arranged such that the object to be measured is in intimate contact with the channel through which the SAW propagates.

The antenna 98.1 is connected with the IDT 97.1, and receives an incident electric wave from the operational processing section 91, to give an induced voltage to the IDT 97.1.

the antenna 98.2 is connected with the IDT 97.2, and receives the voltage induced at the IDT 97.2, to emit a reflected electric wave to the operational processing section 91. Similarly, the antenna 98.3 is connected with the IDT 97.3, and receives a voltage induced at the IDT 97.3, to emit a reflected electric wave to the operational processing section 91.

As thus described, since the sensor section 92 is arranged such that the object to be measured is in intimate contact with the surface of the substrate section 99, the SAW that propagates through the substrate section 99 includes information on the object to be measured. Further, since the IDT 97.2 and the antenna 98.2 generate a reflected electric wave including information on the object to be measured, the operational processing section 91 is capable of calculating the frictional characteristic of the object to be measured.

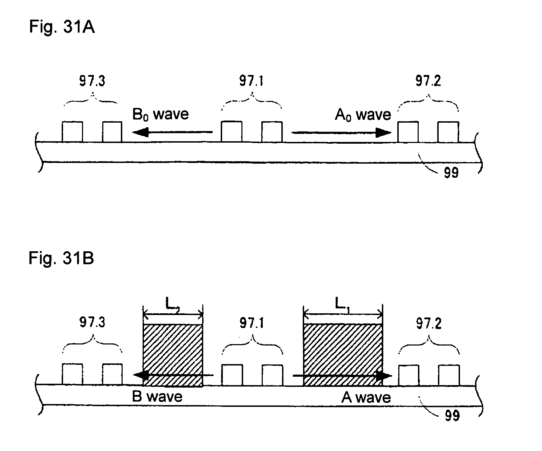

FIG. 31 shows a view for explaining a method for deriving a loss tangent according to an SAW.

FIG. 31A shows the case of acquiring a reference value.
FIG. 31B shows the case of deriving a loss tangent of the object 9 to be measured.

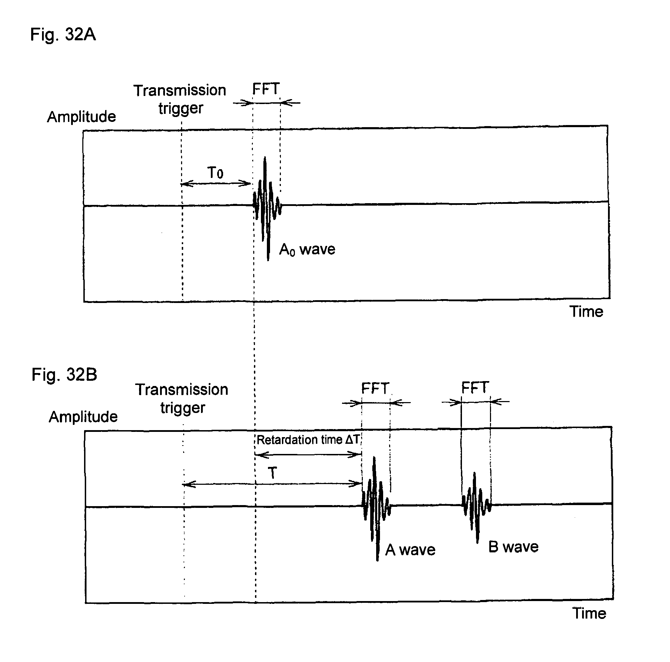

With reference to FIG. 31A, FIG. 32 shows time waveforms in the respective cases of FIG. 31.
FIG. 32A shows a time waveform in FIG. 31A.

FIG. 32B shows a time waveform in FIG. 31B.

With reference to FIG. 30 and FIG. 31A, the operating section 93 acquires a reflected electric wave as the reference value of the sensor section 92 when the object 9 to be measured is not present. In a state where the object to be measured is not in intimate contact with the sensor section 92, when the transmission circuit 94 emits an incident electric wave, an SAW ($A_0$ wave) generated at the IDT 97.1 propagates through the surface of the substrate section 99 to reach the IDT 97.2. Simultaneously, an SAW ($B_0$ wave) generated at the IDT 97.1 propagates through the surface of the substrate section 99 to reach the IDT 97.3. Further, the SAW having reached the IDT 97.2 is emitted as a reflected electric wave through the antenna 98.2, and the SAW having reached the IDT 97.3 is emitted as a reflected electric wave through the antenna 98.3.

With reference to FIG. 32A, upon receipt of a trigger signal from the transmission circuit 94, the time data memory section 96 starts storage of data. Therefore, the operating section 93 measures propagation time between emission of the incident electric wave from the transmission circuit 94 and reception of the reflected electric waves ($A_0$ wave or $B_0$ wave) in the reception circuit 95. It is to be noted that, while a case is exemplified where the operating section 93 measures propagation time $T_0$ until reception of the reflected electric wave ($A_0$ wave) in the reception circuit 95 in Embodiment 6, the propagation time of either the $A_0$ wave or the $B_0$ wave may be measured.

Here, the $A_0$ wave is expressed by: $A_0(f)\exp(i\theta_0(f))$, where $A_0(f)$ is an amplitude value (real value) at each frequency, and $\theta_0(f)$ is a phase ($0 \leq \theta_0(f) < \infty$) at each frequency. The operating section 93 then performs FFT processing on the time waveform stored in the time data memory section 96 to acquire an amplitude $A_0(f)$ and a phase $\theta_0(f)$ at each frequency. In this manner, the operating section 93 acquires reference values.

With respect to FIG. 31G, next, when the loss tangent of the object 9 to be measured is to be derived, an object 9.1 to be measured and an object 9.2 to be measured, which are made of an equivalent material and have different lengths, are arranged so as to be in intimate contact with the sensor section 92. When the transmission circuit 94 emits an incident electric wave, an SAW (A wave) generated at the IDT 97.1 propagates through the surface of the substrate section 99, passes through the object 9.1 to be measured, and then reaches the IDT 97.2. Simultaneously, an SAW (B wave) generated at the IDT 97.1 propagates through the surface of the substrate section 99, passes through the object 9.2 to be measured, and then reaches the IDT 97.3. Further, the SAWs (A wave, B wave) having reached the IDTs 97.2, 97.3 are emitted as reflected electric waves through the antenna 98.2, 98.3, respectively.

With reference to FIG. 32B, in the sensor section 92, a propagation velocity of the A wave changes (decreases) according to acoustic impedance of the object 9.1 to be measured, and thereby, a reflected electric wave received by the reception circuit 95 is delayed by delay time $\Delta T$ as compared with the case where the object 9.1 to be measured is not present.

Upon receipt of a trigger signal from the transmission circuit 94, the time data memory section 96 starts storage of data. Therefore, the operating section 93 measures propagation time T between emission of the incident electric wave from the transmission circuit 94 and reception of the reflected electric wave (A wave) in the reception circuit 95, and compares the measured propagation time T and the reference value $T_0$, to derive delay time $\Delta T$.

Further, the A wave received by the reception circuit 95 is expressed by: $A(f)\exp(i\theta_A(f))$, and the B wave received by the reception circuit 95 is expressed by: $B(f)\exp(i\theta_B(f))$, where i are imaginary units, $A(f)$ and $B(f)$ are amplitude values (real values) of the A wave and the B wave at each frequency, and $\theta_A(f)$ and $\theta_B(f)$ are phases ($0 \leq \theta_A(f) < \infty$, $0 \leq \theta_B(f) < \infty$) of the A wave and the B wave at each frequency. The operating section 93 performs FFT processing on the time waveform stored in the time data memory section 96, to acquire an amplitude $A(f)$ and a phase $\theta(f)$ at each frequency.

Using lengths L1, L2 of the objects 9.1, 9.2 to be measured, and amplitude values of the A wave and the B wave at each frequency, an attenuation coefficient $\alpha(f)$ of the SAW is expressed by an expression (13).

$$\alpha(f) = \{1 / (L_2 - L_1)\ln(A(f) / B(f)) \ldots (13)$$

Further, using the delay time $\Delta T$, propagation velocity $V_A$ of the SAW, and the amplitude values and the phases of the A wave and the B wave at each frequency, a phase viscosity $V_p(f)$ of the SAW is expressed by an expression (14):

$$V_p(f) = 2\pi f L_1 / (\tan\theta_0 - \tan\theta_A + 2\pi f L_1 / V_A + 2\pi f \Delta T) \ldots (14)$$

Further, using the attenuation coefficient $\alpha(f)$ and the phase viscosity $V_p(f)$, derived from the expressions (13) and (14), a loss tangent $\tan \delta(f)$ is expressed by an expression (15):

$$\tan \delta(f) = \alpha(f) \times V_p(f) / \pi f \ldots (15)$$

Therefore, the operating section 93 performs calculations of the expressions (13) to (15) to derive the loss tangent $\tan \delta(f)$. Further, using the conversion constants A and B, the operating section 93 calculates the frictional coefficient from the derived loss tangent $\tan \delta(f)$.

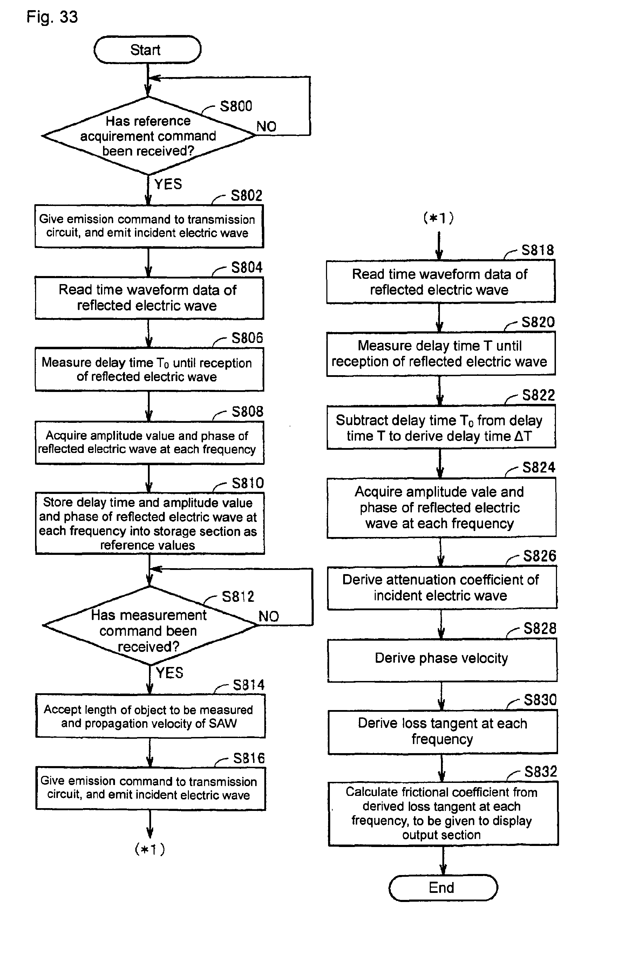

FIG. 33 shows a flowchart for measuring the frictional characteristic according to the SAW. With reference to Fig. 30 and FIG. 33, the operating section 93 determines whether or not to have received a reference acquirement command through the input section 18 (Step S800). When having received no reference acquirement command (when NO in Step S800), the operating section 93 waits until receiving the reference acquirement command (Step S800).

Meanwhile, the user arranges the object 9 to be measured so as not to be in intimate contact with the sensor section 92, and then gives the reference acquirement command.

When having received the reference acquirement command (when YES in Step S800), the operating section 93 gives an emission command to the transmission control circuit 94 and allows the incident electric wave to be emitted (Step S802).

Subsequently, the operating section 93 reads time waveform data of a reflected electric wave ($A_0$ wave) received by the reception circuit 95 from the time data memory section 96 (Step S804). The operating section 93 then measures propagation time To between emission of the incident electric wave from the transmission circuit 94 and reception of the reflected electric wave ($A_0$ wave) in the reception circuit 95 (Step S806). Further, the operating section 93 performs FFT processing with respect to time waveform data of the read reflected electric wave ($A_0$ wave), to acquire an amplitude value and a phase of the reflected electric wave ($A_0$ wave) at each frequency (Step S808). Moreover, the operating section 93 stores the measured propagation time To and the acquired amplitude value and phase of the reflected electric wave at each frequency into the storage section 14 as reference values. (Step S810).

Next, the operating section 93 determines whether or not to have received a measurement command (Step S812). When having received no measurement command (when NO in Step S812), the operational processing section 93 waits until receiving the measurement command (Step S812). When having received the measurement command (when YES in Step S812), the operating section 93 accepts the lengths of the objects 9.1, 9.2 to be measured and the propagation velocity of the SAW (Step S814).

Meanwhile, the user arranges the objects 9.1, 9.2 to be measured so as to be in intimate contact with the sensor section 92. Thereafter, the user gives an measurement command, and then gives the propagation velocity of the SAW.

The operating section 93 then gives an emission command to the transmission circuit 94, to allow an incident electric wave to be emitted (Step S816).

Subsequently, the operating section 93 reads time waveform data of reflected electric waves (A wave and B wave) received by the reception circuit 95 from the time data memory section 96 (Step S818). The operating section 93 then measures propagation time T between emission of the incident electric wave from the transmission circuit 94 and reception of the reflected electric wave (A wave) in the reception circuit 95 (Step S820). Further, the operating section 93 reads propagation time $T_0$ of the $A_0$ wave from the storage section 14 as a reference value, and subtract the propagation time To from the propagation time T, to derive delay time $\Delta T$ (Step S822).

Further, the operating section 93 performs FFT processing with respect to the read time waveform data of the reflected electric waves (A wave and B wave), to acquire amplitude values and phases of the reflected electric waves (A wave and B wave) at each frequency.

The operating section 93 then derives an attenuation coefficient of the incident electric wave from the accepted lengths $L_1$, $L_2$ of the objects 9.1, 9.2 to be measured and the amplitude values of the reflected electric waves (A wave and B wave) at each frequency (Step S826). Further, the operating section 93 derives a phase velocity from the accepted propagation velocity $V_A$ of the SAW, the derived delay time AT, and the amplitude values and the phases of the reflected electric waves ($A_0$ wave and A wave) at each frequency (Step S828).

The operating section 93 derives a loss tangent at each frequency from the derived attenuation coefficient and shifting velocity (Step S830). Subsequently, the operating section 93 calculates the frictional characteristic from the derived loss tangent at each frequency, to give the frictional characteristic to the display output section 16 (Step S832). Thereby, the user can be notified of the calculated frictional characteristic through the display output section 16. The operating section 93 then completes its processing.

As thus described, the frictional characteristic measuring apparatus 600 according to Embodiment 6 calculates the frictional characteristic of the object to be measured.

It should be noted that the sensor section 92 can be configured such that the frequency of the SAW that propagates through the surface of the sensor section 92 is limited to resonant frequencies of the IDTs 97.1, 97.2, 97.3. Namely, even when a plurality of frequency components are included in an incident electric wave emitted from the transmission circuit 94, the frequency components of the reflected electric wave emitted by the sensor section 92 can be filtered only to the resonant frequency. With such a sensor section 92 adopted, it is not necessary to perform FFT processing, thereby permitting faster calculation of the frictional characteristic.

Further, in the frictional characteristic measuring apparatus 600 according to the modified example of Embodiment 6, a plurality of sensor sections 92 having different resonance frequencies are arranged so that the frictional characteristic measuring apparatus 600 can be incorporated into the object to be measured such as a tire, as in the case of the frictional characteristic measuring apparatus 200 according to Embodiment 2, and the slipping state can also be detected. Since each function is the same as in Embodiment 2, the specific description thereof is not repeated.

It should be noted that, while the sensor section having the antenna for receiving an incident electric wave and the antenna for emitting a reflected electric wave in Embodiment 6 above, the configuration is not limited to this, but can be a configuration where the sensor section comprises a common antenna for reception and emission of an electric wave.

According to Embodiment 6 of the present invention, the sensor section receives an incident electric wave transmitted from the operational processing section and then generates a surface acoustic wave, and further emits a reflected electric wave according to a viscoelastic characteristic of the object to be measured. Therefore, since the sensor section is driven by the incident electric wave received from the operational processing section, supplying power from the outside is not necessary. There is thus no restriction on a place for arranging the sensor section, thereby allowing easy calculation of the frictional characteristic of the object to be measured in operation.

The present embodiments should be considered as illustrative but not restrictive. The scope of the invention is defined by the appended claims rather than by the description preceding them, and all changes that fall within metes and bounds of the claims, or equivalence of such metes and bounds thereof, are therefore intended to be embraced by the claims.

**Claims**

1. A frictional characteristic measuring apparatus comprising:

   a sensor section arranged in intimate contact with an object to be measured, for generating a variation according to a viscoelastic characteristic of the object to be measured; and
   an operational processing section for acquiring a loss tangent among viscoelastic characteristics of the object to be measured based upon the variation of the sensor section, and calculating a frictional characteristic of the object to be measured from the acquired loss tangent.

2. The frictional characteristic measuring apparatus according to claim 1, wherein
   the sensor section includes:

   an emission device for emitting an incident sound wave to the object to be measured;
   a reception device for receiving a reflected sound wave generated by reflection of the incident sound wave emitted by the emission device on the object to be measured; and
   a delay member, through which the incident sound wave and the reflected sound wave are propagated, for generating delay time from emission of the incident sound wave by the emission device to reception of the reflected sound wave by the reception device, and
   the operational processing section calculates a loss tangent of the object to be measured based upon the reflected sound wave received by the reception device in the sensor section.

3. The frictional characteristic measuring apparatus according to claim 1, wherein
   the sensor section includes:

   an emission device for emitting an incident sound wave to the object to be measured;
   a reception device for receiving a reflected sound wave generated by reflection of the incident sound wave emitted by the emission device on the object to be measured; and
   a delay member, through which the incident sound wave and the reflected sound wave are propagated, for generating delay time from emission of the incident sound wave by the emission device to reception of the reflected sound wave by the reception device, and
   the operational processing section calculates a loss tangent of the object to be measured based upon a first reflected sound wave generated on an interface between the delay member and the object to be measured and a second reflected sound wave generated on a face of the object to be measured which is opposed to the interface where the first reflected sound wave is generated.

4. The frictional characteristic measuring apparatus according to claim 3, wherein the sensor section further includes a reflection member arranged in intimate contact with the object to be measured, on the face of the object to be measured which is opposed to the interface where the first reflected sound wave is generated.

5. The frictional characteristic measuring apparatus according to claim 2 or 3, wherein the operational processing section calculates a loss tangent of the object to be measured by comparing the reflected sound wave with a previously acquired reference value.

6. The frictional characteristic measuring apparatus according to claim 2 or 3, wherein
the sensor section further includes a transducer for receiving an electrical signal to generate the incident sound wave, and receiving the reflected sound wave to generate an electrical signal, and
the transducer realizes the emission device and the reception device.

7. The frictional characteristic measuring apparatus according to claim 1, wherein
the sensor section includes:

an emission device for emitting an incident sound wave to the object to be measured; and
a reception device for receiving a transmitted sound wave generated by transmission of the incident sound wave emitted by the emission device through the object to be measured, and
the operational processing section calculates a loss tangent of the object to be measured based upon the incident sound wave emitted by the emission device in the sensor section and the transmitted sound wave received by the reception device in the sensor section.

8. The frictional characteristic measuring apparatus according to claim 2 or 3, wherein
the sensor section further includes a first transmitting section for transmitting to the operational processing section waveform data of a sound wave received by the reception device and/or a sound wave emitted by the emission device through a radio signal, and
the operational processing section further includes a second transmitting section for receiving the waveform data transmitted from the sensor section.

9. The frictional characteristic measuring apparatus according to claim 1, wherein
the sensor section includes a distorted member arranged so as to be in intimate contact with the object to be measured, being expanded or contracted in an inward direction of the interface between the distorted member and the object to be measured according to an internal electric field generated by an applied voltage, and
the operational processing section calculates a loss tangent of the object to be measured based upon an impedance derived from a current flowing in a closed circuit including the distorted member.

10. The frictional characteristic measuring apparatus according to claim 9, wherein
the sensor section further includes a first transmitting section for transmitting the impedance to the operational processing section through a radio signal, and
the operational processing section further includes a second transmitting section for receiving the impedance transmitted from the sensor section.

11. The frictional characteristic measuring apparatus according to claim 8, wherein the sensor section is arranged so as to move integrally with the object to be measured.

12. The frictional characteristic measuring apparatus according to claim 2 or 3, wherein
the object to be measured moves so as to generate frictional force on the face thereof in contact with another member,
the sensor section further includes a first transmitting section for transmitting to the operational processing section waveform data of a sound wave received by the reception device and/or a sound wave emitted by the emission device through a radio signal,
the emission device irradiates the contact face of the object to be measured with the incident sound wave,
the reception device receives the reflected sound wave generated by reflection on the contact face of the object to be measured, and
the operational processing section further includes a second transmitting section for receiving the waveform data transmitted from the sensor section.

**13.** The frictional characteristic measuring apparatus according to claim 7, wherein
the object to be measured moves so as to generate frictional force on the face thereof in contact with another member,
the sensor section further includes a first transmitting section for transmitting to the operational processing section waveform data of a sound wave received by the reception device and/or a sound wave emitted by the emission device through a radio signal,
the emission device applies an incident sound wave along the contact face of the object to be measured,
the reception device receives a transmitted sound wave having been transmitted through the vicinity of the contact face of the object to be measured, and
the operational processing section further includes a second transmitting section for receiving the waveform data transmitted from the sensor section.

**14.** The frictional characteristic measuring apparatus according to claim 9, wherein
the object to be measured moves so as to generate frictional force on the face thereof in contact with another member,
the sensor section further includes a first transmitting section for transmitting the impedance to the operational processing section through a radio signal, and is arranged in contact with the object to be measured such that the interface is located along the contact face of the object to be measured, and
the operational processing section further includes a second transmitting section for receiving the impedance transmitted from the sensor section.

**15.** The frictional characteristic measuring apparatus according to claim 8, wherein
the object to be measured moves so as to generate frictional force on the face thereof in contact with another member,
the sensor section is arranged so as to move integrally with the object to be measured,
the reception device receives a slipping sound wave generated by friction of the object to be measured against the another member, and
the operational processing section detects a slipping state of the object to be measured based upon the slipping sound wave received by the sensor section.

**16.** The frictional characteristic measuring apparatus according to claim 8, wherein
the sensor section further includes:

a power generation section for generating electric power from movement energy generated by movement of the object to be measured; and
a power storage section for storing the electric power supplied from the power generation section.

**17.** The frictional characteristic measuring apparatus according to claim 12, wherein
the sensor section further includes:

a power generation section for generating electric power from movement energy generated by movement of the object to be measured; and
a power storage section for storing the electric power supplied from the power generation section.

**18.** The frictional characteristic measuring apparatus according to claim 1, wherein
the sensor section includes:

a substrate section arranged such that first and second faces thereof are in intimate contact with the object to be measured, for propagating a surface acoustic wave along the first and second faces,
a first electrode arranged on the substrate section, for receiving an incident electric wave from the outside to generate the surface acoustic wave,
a second electrode arranged so as to be opposed to the first electrode through the first face on the substrate section, for generating a first reflected electric wave from a first surface acoustic wave that arrives after transmitting from the first electrode through the object to be measured in intimate contact with the first face; and
a third electrode arranged so as to be opposed to the first electrode through the second face on the substrate section, for generating a second reflected electric wave from a second surface acoustic wave that arrives after transmitting from the first electrode through the object to be measured in intimate contact with the second face, and
the operational processing section includes:

a transmission circuit for emitting the incident electric wave to the sensor section;
a reception circuit for receiving the first and second reflected electric waves from the sensor section; and
an operating section for calculating a loss tangent of the object to be measured based upon the incident electric wave and the first and second reflected electric waves.

19. The frictional characteristic measuring apparatus according to claim 8, wherein
the object to be measured is a tire, and
the sensor section is arranged inside the tire.

20. The frictional characteristic measuring apparatus according to claim 12, wherein
the object to be measured is a tire, and
the sensor section is arranged inside the tire.

21. The frictional characteristic measuring apparatus according to claim 18, wherein
the object to be measured is a tire, and
the sensor section is arranged inside the tire.

22. The frictional characteristic measuring apparatus according to claim 1, wherein the operational processing section further includes a deterioration state determining device for determining a deterioration state of the object to be measured based upon changes in frictional characteristic of the same object to be measured.

23. The frictional characteristic measuring apparatus according to claim 22, wherein the deterioration state determining device determines the deterioration state of the object to be measured based upon changes in peak frequency and/or peak value of the frictional characteristic.

24. The frictional characteristic measuring apparatus according to claim 1, wherein the operational processing section further includes a quality determining device for determining quality of the object to be measured by comparing the frictional characteristic of the object to be measured with a predetermined frictional characteristic.

25. The frictional characteristic measuring apparatus according to claim 23,
wherein the deterioration state determining device determines quality of the object to be measured by comparing the peak frequency and/or peak value of the frictional characteristic with a predetermined peak frequency and/or peak value.

26. The frictional characteristic measuring apparatus according to claim 22 or 24, wherein the operational processing section further includes a display output section for displaying and/or outputting to the outside determined results of the deterioration state determining device and/or the quality determining device.

27. The frictional characteristic measuring apparatus according to claim 1, wherein the operational processing section further includes a calibration device for receiving a loss tangent of a calibration reference with a known frictional characteristic and determining a conversion coefficient for converting the loss tangent into the frictional coefficient so as to make a frictional characteristic, calculated from the acquired loss tangent, substantially coincide with the frictional characteristic of the calibration reference.

28. A tire directed to a frictional characteristic measuring apparatus including the sensor section in the frictional characteristic measuring apparatus according to claim 8.

29. A tire directed to a frictional characteristic measuring apparatus including the sensor section in the frictional characteristic measuring apparatus according to claim 12.

30. A tire directed to a frictional characteristic measuring apparatus including the sensor section in the frictional characteristic measuring apparatus according to claim 18.

Fig. 1

Fig. 2

Fig. 3A

Fig. 3B

Fig. 3C

Fig. 4A

Fig. 4B

Fig. 5

```
                    ┌─────────────┐
                    │    Start    │
                    └─────────────┘
                           │
                           ▼                    ┌─── S100
                      ╱──────────╲
                     ╱ Has reference╲      NO
                    ╱  acquirement   ╲──────────┐
                    ╲  command        ╱         │
                     ╲ been received?╱          │
                      ╲──────────╱              │
                           │ YES                │
                           ▼                    │
            ┌──────────────────────────────┐    │
            │ Emit incident sound wave      │────── S102
            │ from transducer               │    │
            └──────────────────────────────┘    │
                           │                    │
                           ▼                    │
            ┌──────────────────────────────┐    │
            │ Read amplitude value data of  │────── S104
            │ reflected sound wave          │    │
            └──────────────────────────────┘    │
                           │                    │
                           ▼                    │
            ┌──────────────────────────────┐    │
            │ Acquire amplitude value and   │────── S106
            │ phase of reflected sound wave │    │
            │ at each frequency             │    │
            └──────────────────────────────┘    │
                           │                    │
                           ▼                    │
            ┌──────────────────────────────┐    │
            │ Store acquired amplitude value│────── S108
            │ and phase into storage section│   │
            │ as reference values           │    │
            └──────────────────────────────┘    │
                           │                    │
                           ▼                    │
                      ╱──────────╲    ┌─── S110 │
                     ╱            ╲   NO         │
                    ╱ Has measurement╲───────────┘
                    ╲ command        ╱
                     ╲ been received?╱
                      ╲──────────╱
                           │ YES
                           ▼
            ┌──────────────────────────────┐
            │ Emit incident sound wave      │────── S112
            │ from transducer               │
            └──────────────────────────────┘
                           │
                           ▼
            ┌──────────────────────────────┐
            │ Read amplitude value data of  │────── S114
            │ reflected sound wave          │
            └──────────────────────────────┘
                           │
                           ▼
            ┌──────────────────────────────┐
            │ Acquire amplitude value and   │────── S116
            │ phase of reflected sound wave │
            │ at each frequency             │
            └──────────────────────────────┘
                           │
                           ▼
            ┌──────────────────────────────┐
            │ Derive loss tangent at each   │────── S118
            │ frequency                     │
            └──────────────────────────────┘
                           │
                           ▼
            ┌──────────────────────────────┐
            │ Calculate frictional          │────── S120
            │ characteristic from loss      │
            │ tangent, to be given to       │
            │ display output section        │
            └──────────────────────────────┘
                           │
                           ▼
                    ┌─────────────┐
                    │     End     │
                    └─────────────┘
```

EP 1 752 765 A2

Fig. 6A

Fig. 6B

Fig. 6C

36

Fig. 7

Start

S200
Has threshold acquirement command been received?

NO

S208
NO
Has deterioration state determination command been received?

NO

YES

Calculate frictional characteristic of object to be measured (same as Step S100 to Step S120) — S202

YES

Calculate frictional characteristic of object to be measured (same as Step S100 to Step 120) ··· S210

Acquire peak frequency and peak value — S204

Acquire peak frequency and peak value — S212

Store acquired peak frequency and peak value into storage section as frequency and frictional coefficient of threshold — S206

Reads frequency and frictional coefficient of threshold from storage section — S214

S216
Does acquired peak frequency exceed frequency of threshold?

NO

YES

S218
Does acquired peak frequency exceed frictional coefficient of threshold?

NO

YES

Determine object to be measured has not come into deterioration state — S220

S222
Determine object to be measured is in deterioration state

End

EP 1 752 765 A2

37

Fig. 8A

Fig. 8B

Fig. 9

```
            ╭─────────────╮
            │    Start     │
            ╰──────┬──────╯
                   │            ┌─ S300
                   ▼
   ┌──────────────────────────────────┐
   │ Accept frictional coefficient μ_ref(f_k) of │
   │    calibration reference at each of │
   │       frequencies f_1 to f_n         │
   └───────────────┬──────────────────┘
                   │
                   ▼◄──────────────────────┐
              ╱─────────╲     ┌─ S302        │
             ╱  Has calibration ╲             │
            ╱  start command been ╲──── NO ───┘
             ╲    received?     ╱
              ╲─────────╱
                   │ YES         ┌─ S304
                   ▼
   ┌──────────────────────────────────┐
   │  Derive loss tangent of object to be │
   │    measured at each frequency      │
   │   (same as Steps S100 to S118)    │
   └───────────────┬──────────────────┘
                   │             ┌─ S306
                   ▼
   ┌──────────────────────────────────┐
   │   Extract loss tangent tanδ(f_k) at │
   │     each of frequencies f_1 to f_n  │
   └───────────────┬──────────────────┘
                   │             ┌─ S308
                   ▼
   ┌──────────────────────────────────┐
   │      Determine conversion constant  │
   └───────────────┬──────────────────┘
                   │             ┌─ S310
                   ▼
   ┌──────────────────────────────────┐
   │   Store determined conversion       │
   │    constant into storage section   │
   └───────────────┬──────────────────┘
                   │
                   ▼
            ╭─────────────╮
            │     End      │
            ╰─────────────╯
```

Fig. 10

200

Sensor section

5

36 Power generation section

38 Power storage section

34 Transmitting section

12 Time data memory section

22 Transmission control circuit

28 Signal processing circuit

24 Transmission circuit

26 Reception circuit

25 Direction regulator

20 Transducer

3

Operational processing section

4

32 Transmitting section

30 Operating section

14 Storage section

16 Display output section

18 Input section

Fig. 11A

Fig. 11B

Rotation

9

Xb

5

20,3

Xb

Rim

5

9

20,3

Fig. 12

64

60

62

3.20

Fig. 13

<u>200</u>

Fig. 14

Sound wave generated when tire and road
surface are in friction

Tire

Road surface

Sensor

Sensor receives sound wave generated

Fig. 15

```
                    ┌─────────────────┐
                    │      Start      │
                    └────────┬────────┘
                             │           ┌── S400
                             ▼          ╱
                        ╱─────────╲    ╱
                       ╱ Is frictional╲      NO
                      ╱ characteristic of╲──────────┐
                      ╲ object to be    ╱           │
                       ╲  measured    ╱             │
                        ╲ calculated?╱              │
                         ╲─────────╱                │
                             │                      │
                            YES                     │
                             │           ┌── S402   │
                             ▼          ╱           │
                        ╱─────────╲    ╱            │
                       ╱ Has significant╲    NO     │
                      ╱  time waveform  ╲───────────┤
                      ╲  data been     ╱            │
                       ╲  acquired?   ╱             │
                        ╲─────────╱                 │
                             │                      │
                            YES    ┌── S404         │
                             ▼    ╱                 │
                ┌───────────────────────┐          │
                │ Derive amplitude value │          │
                │    at each frequency   │          │
                └───────────┬───────────┘          │
                            │     ┌── S406          │
                            ▼    ╱                  │
                ┌───────────────────────┐          │
                │ Acquire reference data │          │
                │   from storage section │          │
                └───────────┬───────────┘          │
                            │     ┌── S408          │
                            ▼    ╱                  │
                ┌───────────────────────┐          │
                │ Compare derived        │          │
                │ amplitude value at each│          │
                │ frequency with acquired│          │
                │    reference data      │          │
                └───────────┬───────────┘          │
                            │     ┌── S410          │
                            ▼    ╱                  │
                ┌───────────────────────┐          │
                │ Detect slipping state  │          │
                │ and give detection     │          │
                │ result to data display │          │
                │    output section      │          │
                └───────────┬───────────┘          │
                            │◄─────────────────────┘
                            ▼
                    ┌─────────────────┐
                    │       End       │
                    └─────────────────┘
```

Fig. 16

**300**

**Sensor section** 72

- 22 Transmission control circuit
- 24 Transmission circuit
- 25 Direction regulator
- 20 Transducer
- 3
- 8
- 28 Signal processing circuit
- 26 Reception circuit

**Operational processing section** 71

- 12 Time data memory section
- 70 Operating section
- 14 Storage section
- 16 Display output section
- 18 Input section

Fig. 17A

Fig. 17B

Fig. 17C

Fig. 18A

Fig. 18B

Fig. 18C

Fig. 19

Fig. 20

<u>302</u>

Fig. 21

Fig. 22

Fig. 23

```
                    ┌─────────────┐
                    │    Start    │
                    └──────┬──────┘
                           │            ◄──────────────┐
                           ▼                           │
                         ╱───╲        ┌─ S600           │
                       ╱       ╲                        │
                     ╱ Has measure-╲    NO              │
                    ⟨ ment command   ⟩──────────────────┘
                     ╲ been received?╱
                       ╲           ╱
                         ╲───╱
                           │ YES
                           ▼        ┌─ S602
              ┌────────────────────────────────┐
              │  Emit incident sound wave from │
              │           transducer           │
              └────────────────┬───────────────┘
                               │       ┌─ S604
              ┌────────────────────────────────┐
              │ Read time waveform data of incident │
              │ sound wave transmitted by transducer │
              └────────────────┬───────────────┘
                               │       ┌─ S606
              ┌────────────────────────────────┐
              │Read time waveform data of transmitted│
              │ sound wave received by transducer │
              └────────────────┬───────────────┘
                               │       ┌─ S608
              ┌────────────────────────────────┐
              │  Acquire amplitude values and phases │
              │ of incident sound wave and transmitted │
              │   sound wave at each frequency   │
              └────────────────┬───────────────┘
                               │       ┌─ S610
              ┌────────────────────────────────┐
              │     Derive loss tangent at each     │
              │           frequency            │
              └────────────────┬───────────────┘
                               │       ┌─ S612
              ┌────────────────────────────────┐
              │ Calculate frictional characteristic from │
              │ loss tangent at each frequency, to be │
              │   given to display output section   │
              └────────────────┬───────────────┘
                               ▼
                    ┌─────────────┐
                    │     End     │
                    └─────────────┘
```

**Fig. 24**

402

**Fig. 25**

Fig. 26

500

Sensor section ___88

Operational processing section ___86

Measurement impedance

84

Operating section

14

Storage section

52

50

54

56

Expansion and contraction

Expansion and contraction

16

Display output section

18

Input section

9

Object to be measured

Fig. 27

58.1

56

58.2

Fig. 28

```
        ┌──────────────────┐
        │      Start        │
        └──────────────────┘
                 │
                 ▼
              ╱──────╲        S700
           ╱             ╲
          ╱  Has measurement ╲   NO
          ╲  command been    ╱ ──────┐
           ╲   received?   ╱          │
              ╲──────╱                │
                 │ YES                │
                 ▼          S702       │
        ┌──────────────────┐          │
        │ Set applied frequency f to initial │
        │     frequency f_min │          │
        └──────────────────┘          │
                 │                     │
                 ▼          S704       │
        ┌──────────────────┐          │
        │  Give applying frequency │   │
        │ command to voltage generator │ │
        └──────────────────┘          │
                 │                     │
                 ▼          S706       │
        ┌──────────────────┐          │
        │ Derive loss tangent at applied │ │
        │     frequency f  │           │
        └──────────────────┘          │
                 │                     │
                 ▼          S708       │
        ┌──────────────────┐          │
        │ Calculate frictional coefficient from │ │
        │  derived loss tangent at applied │ │
        │ frequency f, to be stored into │  │
        │     storage section │        │
        └──────────────────┘          │
                 │                     │
                 ▼          S710       │
        ┌──────────────────┐          │
        │ Add incremental frequency Δf to │ │
        │   applied frequency f │      │
        └──────────────────┘          │
                 │                     │
                 ▼          S712       │
              ╱──────╲                │
           ╱             ╲   NO        │
          ╱ Does applied frequency ╲ ──┘
          ╲ f exceed maximum ╱
           ╲ frequency f_max? ╱
              ╲──────╱
                 │ YES
                 ▼          S714
        ┌──────────────────┐
        │ Read frictional coefficient at each │
        │ frequency from storage section, to │
        │ be given to display output section │
        └──────────────────┘
                 │
                 ▼
        ┌──────────────────┐
        │       End         │
        └──────────────────┘
```

Fig. 29

<u>90</u>

Measurement impedance

Fig. 30

Fig. 31A

97.3     97.1     97.2

$B_0$ wave     $A_0$ wave

99

Fig. 31B

$L_2$     $L_1$

97.3     97.1     97.2

B wave     A wave

99

Fig. 32A

Fig. 32B

Fig. 33

```
                    ┌──────────┐
                    │  Start   │
                    └──────────┘
                         │
                         ▼
                    ╱─────────╲  ⌐S800
                   ╱ Has reference ╲   NO
                  ╱ acquirement command ╲──┐
                   ╲ been received? ╱      │
                    ╲─────────╱            │
                         │ YES             │
                         ▼ ⌐S802           │
   ┌───────────────────────────────────┐  │
   │ Give emission command to transmission │
   │ circuit, and emit incident electric wave │
   └───────────────────────────────────┘  │
                         │                 │
                         ▼ ⌐S804           │
   ┌───────────────────────────────────┐  │
   │ Read time waveform data of         │  │
   │ reflected electric wave            │  │
   └───────────────────────────────────┘  │
                         │                 │
                         ▼ ⌐S806           │
   ┌───────────────────────────────────┐  │
   │ Measure delay time T₀ until reception │
   │ of reflected electric wave         │  │
   └───────────────────────────────────┘  │
                         │                 │
                         ▼ ⌐S808           │
   ┌───────────────────────────────────┐  │
   │ Acquire amplitude value and phase of │
   │ reflected electric wave at each frequency │
   └───────────────────────────────────┘  │
                         │                 │
                         ▼ ⌐S810           │
   ┌───────────────────────────────────┐  │
   │ Store delay time and amplitude value │
   │ and phase of reflected electric wave at │
   │ each frequency into storage section as │
   │ reference values                   │  │
   └───────────────────────────────────┘  │
                         │◄────────────────┘
                         ▼
                    ╱─────────╲  ⌐S812
                   ╱ Has measurement ╲  NO
                  ╱ command been     ╲──┐
                   ╲ received?       ╱   │
                    ╲─────────╱          │
                         │ YES           │
                         ▼ ⌐S814         │
   ┌───────────────────────────────────┐ │
   │ Accept length of object to be measured │
   │ and propagation velocity of SAW    │ │
   └───────────────────────────────────┘ │
                         │               │
                         ▼ ⌐S816         │
   ┌───────────────────────────────────┐ │
   │ Give emission command to transmission │
   │ circuit, and emit incident electric wave │
   └───────────────────────────────────┘ │
                         │
                         ▼
                       (*1)
```

```
                       (*1)
                         │
                         ▼ ⌐S818
   ┌───────────────────────────────────┐
   │ Read time waveform data of         │
   │ reflected electric wave            │
   └───────────────────────────────────┘
                         │
                         ▼ ⌐S820
   ┌───────────────────────────────────┐
   │ Measure delay time T until         │
   │ reception of reflected electric wave │
   └───────────────────────────────────┘
                         │
                         ▼ ⌐S822
   ┌───────────────────────────────────┐
   │ Subtract delay time T₀ from delay  │
   │ time T to derive delay time ΔT     │
   └───────────────────────────────────┘
                         │
                         ▼ ⌐S824
   ┌───────────────────────────────────┐
   │ Acquire amplitude vale and         │
   │ phase of reflected electric        │
   │ wave at each frequency             │
   └───────────────────────────────────┘
                         │
                         ▼ ⌐S826
   ┌───────────────────────────────────┐
   │ Derive attenuation coefficient of  │
   │ incident electric wave             │
   └───────────────────────────────────┘
                         │
                         ▼ ⌐S828
   ┌───────────────────────────────────┐
   │ Derive phase velocity              │
   └───────────────────────────────────┘
                         │
                         ▼ ⌐S830
   ┌───────────────────────────────────┐
   │ Derive loss tangent at each        │
   │ frequency                          │
   └───────────────────────────────────┘
                         │
                         ▼ ⌐S832
   ┌───────────────────────────────────┐
   │ Calculate frictional coefficient from │
   │ derived loss tangent at each       │
   │ frequency, to be given to display  │
   │ output section                     │
   └───────────────────────────────────┘
                         │
                         ▼
                    ┌──────────┐
                    │   End    │
                    └──────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3215579 B